# FASCICULE DE BREVET EUROPEEN

(11) **EP 0 719 670 B1**
(45) Date de publication et mention de la délivrance du brevet: **31.05.2000**
(21) Numéro de dépôt: 95120492.4
(22) Date de dépôt: 22.12.1995
(51) Int. Cl.: B60K 41/08

(54) **Dispositif de propulsion pour véhicule automobile**
Antriebsvorrichtung eines Fahrzeuges
Drive means for automotive vehicles

(30) Priorité: 28.12.1994 FR 9415758
(43) Date de publication de la demande: 03.07.1996
(73) Titulaire: The Swatch Group Management Services AG, 2501 Biel (CH)
(72) Inventeur: Bühler, Roger, Ch-2400 Le Locle (CH)
(74) Mandataire: Patry, Didier Marcel Pierre

(56) Documents cités:
- EP-A- 0 037 639
- EP-A- 0 391 604
- EP-A- 0 490 627
- EP-A- 0 512 728
- EP-A- 0 573 901
- EP-A- 0 654 624
- DE-A- 4 328 274
- US-A- 3 876 028
- US-A- 4 947 681

## Description

La présente invention est relative à un dispositif de propulsion pour un véhicule automobile comportant en combinaison un moteur à combustion interne et une boîte de vitesses du type utilisé habituellement pour les motocycles.

On sait que les boîtes de vitesses pour motocycles ne comportent en général pas de dispositifs synchroniseurs permettant, lors d'un changement de rapport de vitesses, de faire tourner l'arbre primaire et l'arbre secondaire à des vitesses adaptées de telle manière que le passage du rapport puisse se faire sans qu'il en résulte des dommages pour les pignons devant être mis en prise. Ces dispositifs synchroniseurs sont habituels dans les boîtes de vitesses pour les véhicules automobiles, tels que les dispositifs décrits dans les brevets US 3,876,028 et EP 0 573 901. Toutefois, pour des questions d'encombrement et de poids, on renonce en général à en équiper les motocycles. Le document US-A-3 876 028 montre une boîte de vitesses selon le préambule de la revendication 1.

Dans la demande de brevet français n° 93 13768 du 18 novembre 1993 (FR-A-2 712 654), on a proposé une boîte de vitesses du type motocycle, mais adaptée à un véhicule automobile, notamment à des petites voitures de ville, cette demande de brevet décrivant une solution particulièrement adéquate pour la conception mécanique de la boîte qui en rend l'utilisation particulièrement souple. En particulier, cette solution permet de passer de n'importe quel rapport de vitesses à n'importe quel autre, ce qui n'est habituellement pas possible avec les boîtes classiques de ce type. Pour plus de détails, on se référera à la description de ladite demande de brevet.

La présente invention a pour but de fournir un dispositif de propulsion pour un véhicule automobile tel qu'une petite voiture de ville, comprenant notamment un moteur à combustion interne et une boîte de vitesses du type motocyclette pourvu d'un dispositif de commande automatique, permettant au choix du conducteur du véhicule qui en est équipé de rendre le fonctionnement de la boîte, soit entièrement automatique, soit manuel.

L'invention a donc pour objet un dispositif de propulsion pour véhicule automobile comportant :
- un moteur d'entraînement à combustion interne dont le régime peut être commandé par l'intermédiaire d'une pédale des gaz; et
- une transmission, ladite transmission comprenant :
- une boîte de vitesses,
- un convertisseur de couple et
- un embrayage couplé entre ledit moteur et ladite boîte de vitesses comprenant :
- un arbre primaire, un arbre secondaire, des jeux de pignons calés respectivement sur ces arbres pour être sélectivement mis en prise afin d'assurer l'établissement des rapports de vitesses, les mouvements d'engagement et de dégagement des pignons étant assurés par l'intermédiaire d'un dispositif de commutation mécanique comportant un arbre de sélection de rapports dont des positions angulaires prédéterminées constituent alternativement des positions neutres de dégagement desdits pignons et des positions d'engrènement sélectif desdits pignons pour établir les rapports de vitesses de ladite boîte, le dispositif de commutation mécanique comportant également un arbre de commande coopérant avec ledit arbre de sélection pour autoriser la sélection à partir de tout rapport précédent vers n'importe quel rapport suivant,
- et un dispositif de commande électronique de ladite boîte de vitesses, ledit dispositif de propulsion étant caractérisé en ce qu'il comprend également des moyens permettant le passage des rapports de vitess sans l'aide de synchroniseurs comprenant:
- des moyens pour augmenter rapidement le régime dudit moteur à combustion interne indépendamment de la commande exercée par l'intermédiaire de ladite pédale des gaz et en ce que ledit dispositif de commande électronique comporte, en vue de la descente de rapport de ladite boîte :
- des moyens pour placer ledit arbre de sélection dans l'une desdites positions neutres,
- des moyens pour actionner temporairement lesdits moyens d'augmentation rapide du régime,
- des moyens pour surveiller ledit régime, et
- des moyens pour n'autoriser le passage dudit arbre de sélection vers la position du rapport inférieur que lorsque le régime atteint une valeur compatible avec ledit rapport inférieur.

Il résulte de ces caractéristiques que, malgré la simplicité de la boîte de vitesses qui est dépourvue de synchroniseurs et est donc d'une construction légère et particulièrement robuste, la sélection des rapports peut se faire sans aucune difficulté particulière pour le conducteur du véhicule. Par ailleurs, grâce aux caractéristiques de l'invention, la boîte de vitesses passe automatiquement les rapports, bien que la sélection des rapports puisse éventuellement être faite manuellement. Cependant, la conception de la commande de la boîte préconisée par l'invention autorise un fonctionnement entièrement automatique de la boîte de vitesses ce qui confère au conducteur du véhicule un maximum de confort de conduite.

D'autres caractéristiques et avantages de la présente invention apparaîtront au cours de la description qui va suivre, donnée uniquement à titre d'exemple et faite en se référant aux dessins annexés sur lesquels :
- la figure 1 représente schématiquement un dispositif de propulsion pour un véhicule automobile conçu suivant l'invention, la figure montrant notamment une vue en coupe d'une boîte de vitesses du type motocyclette, modifiée selon les concepts de la demande de brevet précitée, et pouvant être commandée par un dispositif de commande électronique conçu selon la présente invention;
- la figure 2 est un schéma électrique général du dispositif de commande suivant l'invention;
- la figure 2A montre schématiquement la grille de positionnement du levier de commande de la boîte de vitesses;
- la figure 3 montre schématiquement certaines adaptations du moteur à combustion interne nécessaires pour la mise en oeuvre de l'invention;
- la figure 4 est un organigramme du programme principal mis en oeuvre dans le dispositif de commande électronique suivant l'invention;
- les figures 5A à 11 sont des organigrammes de plusieurs sous-programmes exécutés au cours du déroulement du programme principal illustré sur la figure 4.

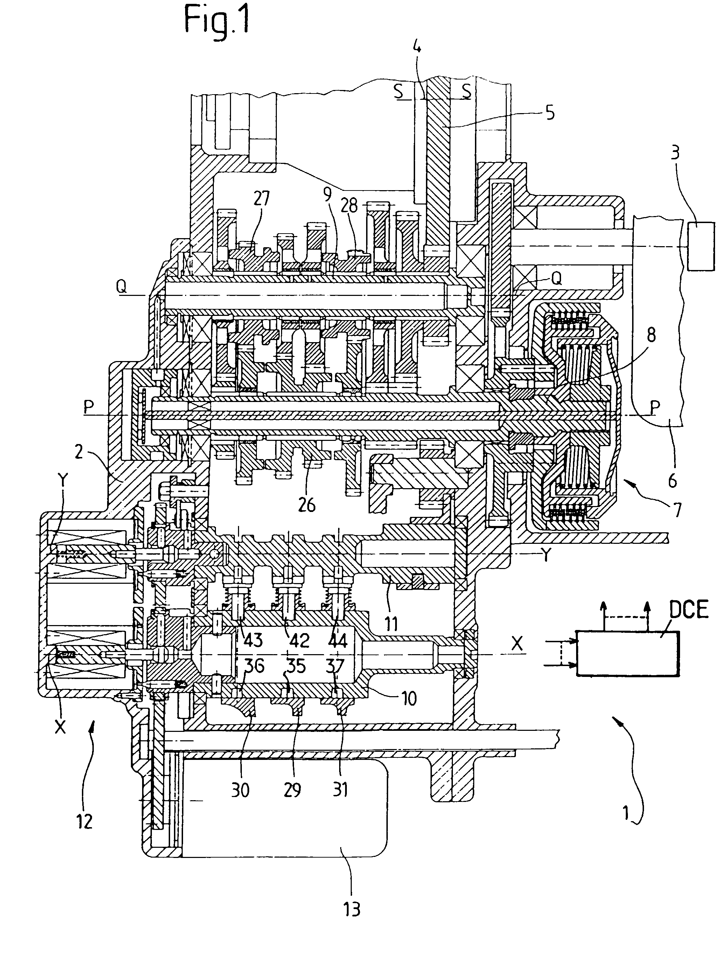

La figure 1 représente, pour mémoire, une mode de réalisation préféré de la boîte de vitesses selon l'invention décrite dans la demande de brevet précitée et désignée ici par le référence générale 1. Par ailleurs, dans la brève description que l'on va en donner ci-après, on a repris les références numériques portées sur la figure 1 de cette demande de brevet pour désigner les mêmes éléments constructifs de la boîte.

Ceci étant, on voit que celle-ci est logée dans un carter 2 et destinée à assurer, avec un rapport de transmission variable, la transmission d'un mouvement de rotation provenant d'un moteur d'entraînement 3 à un arbre de sortie 4 d'axe S-S d'une roue dentée de sortie 5.

La chaîne cinématique interposée entre le moteur d'entraînement 3 et l'arbre de sortie 4 comprend successivement: un convertisseur de couple 6, un embrayage 7, un arbre primaire 8 d'axe P-P et un arbre secondaire 9 d'axe Q-Q. On notera l'absence de synchroniseurs dans cette construction. Par ailleurs, le convertisseur de couple peut être ôté de la chaîne cinématique de la transmission par un couplage direct embrayable qui n'est inactif que lors du changement de rapports de la boîte de vitesse.

La boîte de vitesses comprend également un arbre sélecteur 10 d'axe X-X pour la commande de la sélection des rapports, un arbre 11 de découplage d'axe Y-Y pour la commande de la sélection libre des rapports et de la marche arrière, une unité 12 de commande de ces deux arbres 10 et 11 et un moteur de commande 13.

Dans l'exemple décrit, la boîte 1 présente six rapports de vitesses qui sont obtenus par l'actionnement sélectif de trois baladeurs 26, 27 et 28, montés respectivement sur l'arbre primaire 8 et l'arbre secondaire 9. Ces baladeurs coopèrent avec des fourchettes 29, 30 et 31 montées à rotation sur l'arbre 10 sur lequel elles peuvent également coulisser latéralement grâce à des rainures de guidage 35, 36 et 37 dans lesquelles sont guidées des contre-cames 42, 43 et 44.

Comme décrit en détail dans la demande de brevet précitée, les contre-cames 42, 43 et 44 peuvent être sorties de leurs rainures de guidage respectives dans une position prédéterminée (à 112° dans l'exemple décrit) de l'arbre de découplage 11 rendant ainsi possible la sélection de n'importe quel rapport de vitesses, quel que soit celui dans lequel la boîte était précédemment engagée.

La rotation des arbres 10 et 11 est effectuée par l'unité de commande 12 et le moteur d'entraînement 13, étant entendu que l'unité de commande 12 permet de faire tourner les arbres d'angles prédéfinis correspondant aux divers rapports à sélectionner (arbre 10) et aux positions respectivement de marche arrière et de libération de la rotation de l'arbre 10 (arbre 11). Il est à noter que l'unité de commande 12 et le moteur 13 peuvent être remplacés par d'autres ensembles de commande assurant la rotation des deux arbres 10 et 11. On se référera à la description de la demande de brevet sus-indiquée pour plus de détails concernant la construction et le fonctionnement de la boîte de vitesses.

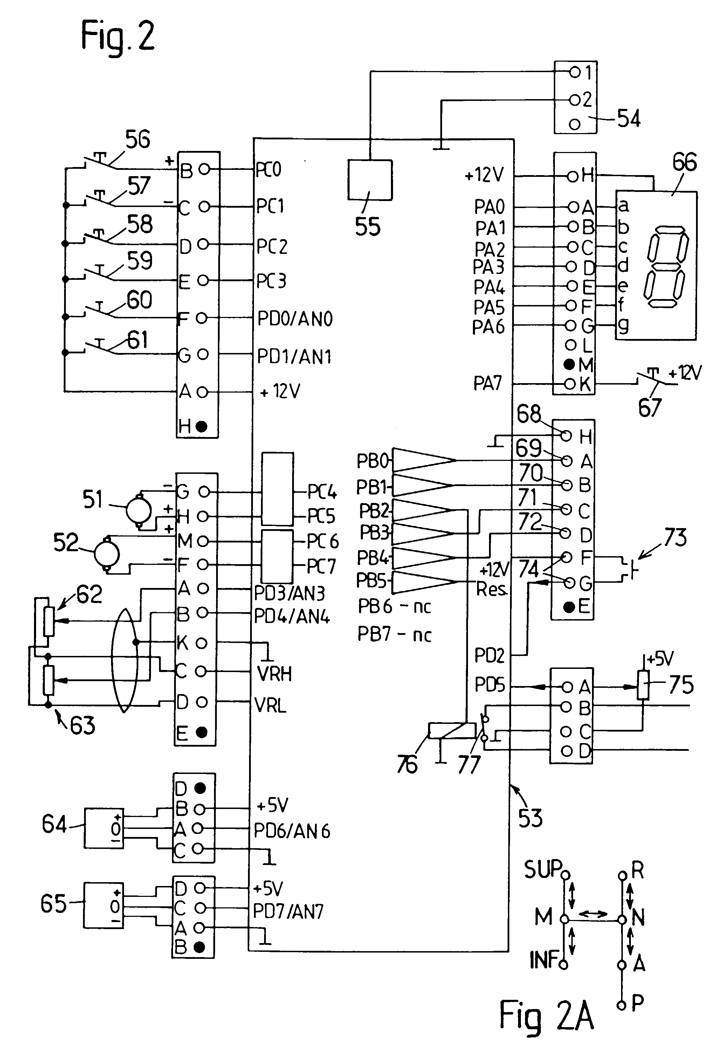

Dans la description qui va suivre de la présente invention, on admettra que les arbres 10 et 11 sont entraînés directement par deux moteurs d'entraînement qui y sont respectivement couplés directement et qui sont représentés schématiquement seulement sur la figure 2. Ils portent respectivement les références 51 et 52. La figure 1 montre encore schématiquement par un bloc fonctionnel le dispositif de commande électronique DCE qui est associé à cette boîte de vitesses, dispositif qui est équipé d'un certain nombre d'entrées et de sorties connectées aux divers organes de la boîte.

En se référant maintenant spécifiquement à la figure 2, on va décrire plus en détail le dispositif de commande automatique conforme à la présente invention. Ce dispositif comporte un microprocesseur 53 qui peut être de tout type approprié que l'on peut trouver dans le commerce. Un microprocesseur particulièrement approprié est celui vendu sous la référence MC68HC805B6.

Les organes périphériques de ce microprocesseur 53 sont d'abord les moteurs 51 et 52 déjà mentionnés ci-dessus qui en reçoivent les signaux de sortie principaux.

Il est alimenté à partir d'une batterie en 54 qui lui fournit son énergie à travers un filtre 55 permettant d'éliminer les parasites sur la tension d'alimentation.

Le microprocesseur 53 reçoit également plusieurs signaux l'informant de l'état d'un levier de commande qui est à la disposition du conducteur du véhicule dont est équipée la boîte de vitesse selon l'invention. De préférence, ce levier est placé sous le volant de manière à pouvoir être facilement actionné par le conducteur du véhicule.

La figure 2A représente la grille de positionnement du levier de commande de la boîte de vitesses. On voit qu'elle présente grosso modo la forme d'un H, dont l'une des branches verticales définit à ses extrémités respectivement les positions de commande de montée de rapport et de descente de rapport (notées SUP et INF), ces positions étant fugitives. La position intermédiaire de cette branche définit la commande manuelle M de la boîte et elle est stable. L'autre branche verticale du H est un peu plus longue et définit, en face de la position M, la commande de neutre N, à l'une de ses extrémités la commande de marche arrière R, à une position intermédiaire la commande de l'automatisme complet A et au bout de cette branche, la commande de parcage P. Toutes les positions de cette branche du H sont stables.

Ces positions sont associées à des interrupteurs se fermant lorsque le conducteur les place dans une position correspondante. Ainsi, l'interrupteur 56 se ferme, lorsque le conducteur souhaite sélectionner un rapport supérieur à celui dans lequel la boîte est engagée (position SUP). De même, un interrupteur 57 se ferme lorsque le conducteur souhaite sélectionner un rapport inférieur (position INF). Un troisième interrupteur 58 se ferme lorsque le frein de parcage du véhicule est serré (position P). Un interrupteur 59 est fermé, lorsque la boîte de vitesses se trouve dans la position neutre N (point mort). Un interrupteur 60 est fermé lorsque le conducteur sélectionne la marche arrière (position R). Enfin, un interrupteur 61 est fermé, lorsque le conducteur souhaite conduire en automatisme complet (position A). La position M est constatée par défaut.

Le microprocesseur reçoit également une information relative à la position angulaire des arbres 10 et 11 grâce à des potentiomètres 62 et 63 respectifs dont les curseurs sont couplés aux moteurs respectifs 51 et 52. Une information de vitesse du moteur 3 est également fournie au microprocesseur 53 par un capteur 64, tandis qu'un capteur 65 fournit une information de vitesse du véhicule lui-même.

Le conducteur du véhicule est informé par le microprocesseur 53 de la position dans laquelle se trouve la boîte de vitesses par un dispositif d'affichage 66 apparaissant par exemple sur le tableau de bord du véhicule et indiquant par un chiffre notamment dans quelle vitesse la boîte est engagée.

Un interrupteur 67 est prévu pour commander le démarrage du moteur 3 du véhicule.

Une borne 68 est destinée à connecter le microprocesseur 53 au potentiel de la masse. Une borne 69 produit un signal permettant de commander le fonctionnement de l'alternateur couplé au moteur du véhicule. Une borne 70 fournit un signal qui commande une électrovanne de serrage et de desserrage de l'embrayage 7. Sur une borne 71 apparaît un signal de commande d'un volet d'air auxiliaire qui sera décrit plus en détail par la suite. La borne 72 est destinée à fournir un signal de commande de démarreur. Un interrupteur 73 de contrôle de la pression d'huile notamment pour la commande de l'embrayage, est raccordé à des bornes 74 du microprocesseur 53.

Un potentiomètre 75 est couplé à la pédale des gaz du moteur pour fournir une information sur la position de celle-ci.

Enfin, un relais 76 commandé par le microprocesseur 53 permet, en agissant sur un interrupteur 77, de commander l'arrivée du carburant au moteur 3 du véhicule et, le cas échéant, de couper cette arrivée, notamment pendant certains passages de rapport de la boîte de vitesses, comme on le verra par la suite.

L'une des particularités de la boîte de vitesses décrite dans la demande de brevet précitée consiste en ce qu'elle est dépourvue de synchroniseurs, ce qui lui confère sa simplicité et sa légèreté. Cependant, on sait qu'habituellement, une telle boîte de vitesses requiert de la part du conducteur une certaine attention, voire de l'habileté pour que les changements de rapport puissent se passer en douceur et sans détériorations des engrenages de la boîte de vitesses. Les conducteurs chevronnés arrivent à ce résultat en procédant à ce que l'on désigne habituellement par le "double débrayage". Comme on sait, ce processus consiste, pour chaque changement de rapport, à débrayer, à mettre au point mort, à adapter le régime du moteur à l'aide de la pédale d'accélérateur, à engager le nouveau rapport, puis à embrayer pour continuer à rouler avec le nouveau rapport.

Il est clair que ce processus qui nécessite une certaine adresse de la part du conducteur, n'est pas adapté à des véhicules de grande diffusion et de surcroît à commande de vitesses automatique, appelés à être conduits par des personnes ignorantes des problèmes de mécanique.

Le dispositif de commande de la présente invention permet d'exécuter les changements de rapport manuellement ou entièrement automatiquement, sans que cette opération ne demande une adresse particulière de la part du conducteur et ce malgré l'absence de synchroniseurs dans la boîte de vitesses.

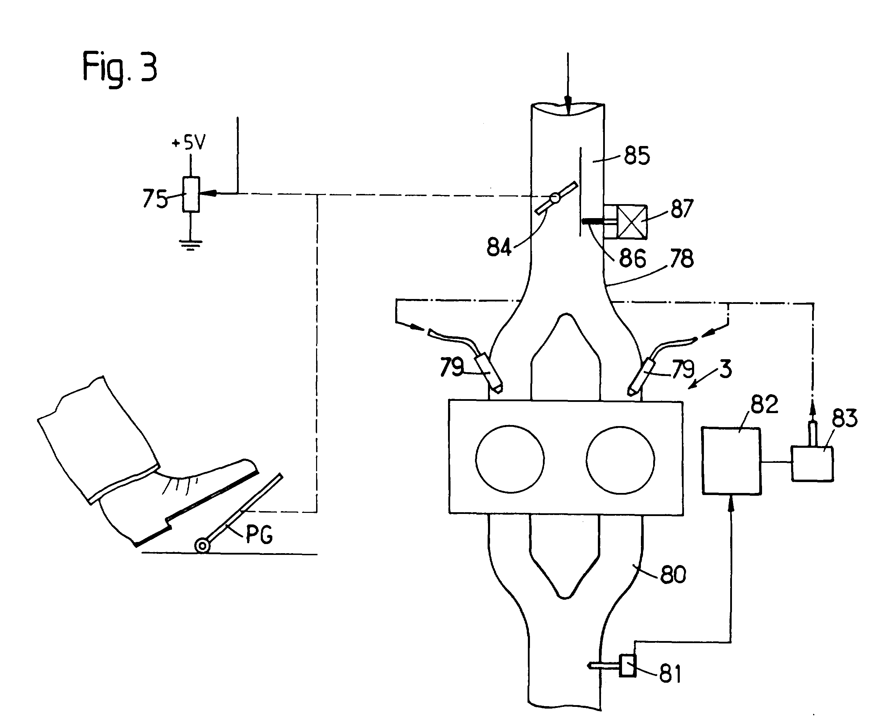

On va se référer maintenant à la figure 3 qui représente très schématiquement le système d'alimentation du moteur 3. Celui-ci est pourvu d'une tubulure 78 d'admission d'air dans laquelle sont prévus deux injecteurs 79 de carburant, le moteur comportant à titre d'exemple, deux cylindres. Il est également pourvu d'une tubulure d'échappement 80 dans laquelle est placée une sonde dite "lambda" 81 permettant d'analyser la composition des gaz d'échappement produits par le moteur. La sonde 81 est reliée à un circuit 82 de commande d'allumage et d'injection qui régit notamment le fonctionnement d'une pompe 83 d'injection de carburant connectée aux injecteurs 79.

Un papillon 84 est disposé dans la tubulure d'admission 78 et connecté mécaniquement à la pédale des gaz PG et au potentiomètre 75 fournissant au microprocesseur 53 l'information de la position de la pédale et, partant, du papillon 84. A l'endroit où se trouve le papillon dans la tubulure d'admission 78, il est prévu un passage de dérivation 85 dans lequel est prévu le volet mobile 86 d'une électrovanne 87 pouvant être excitée à partir de la sortie 71 du microprocesseur 53.

Lorsque l'électrovanne 87 est commandée, le passage 85 est ouvert, ce qui admet au moteur 3 une quantité d'air supplémentaire par rapport à celle admise déjà par le papillon 84, ce qui rend le mélange plus pauvre. Il en résulte immédiatement une réaction au niveau de la sonde "lambda" 81 qui fournit alors un signal au circuit de commande d'allumage 82. Celui-ci, à son tour, donne l'ordre à la pompe 83 d'injection de carburant d'augmenter le débit des injecteurs 79, ce dont il résulte alors une rapide montée en régime du moteur 3.

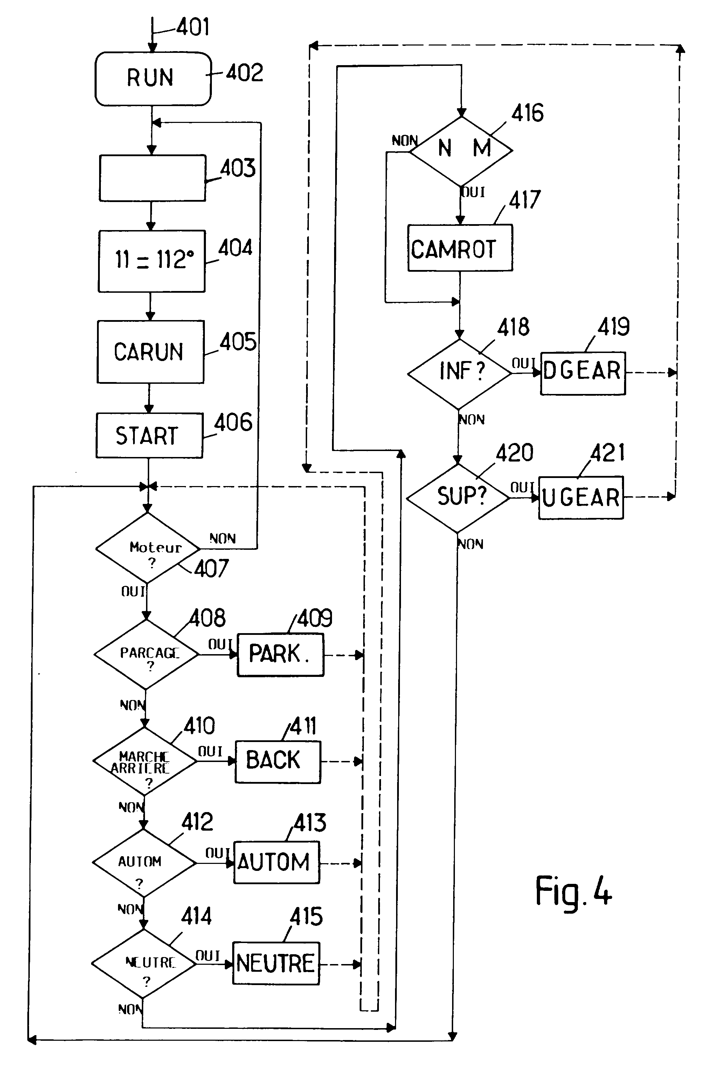

On va maintenant décrire, a titre de mode de réalisation préféré de l'invention, un algorithme de commande de la boîte de vitesses mis en oeuvre dans le microprocesseur 53. La description sera faite à l'aide des organigrammes des figures 4 à 11.

La figure 4 représente le programme principal sur lequel sont greffés plusieurs sous-programmes, dont les principaux, intéressants pour la compréhension de l'invention, seront décrits en faisant référence aux figures suivantes.

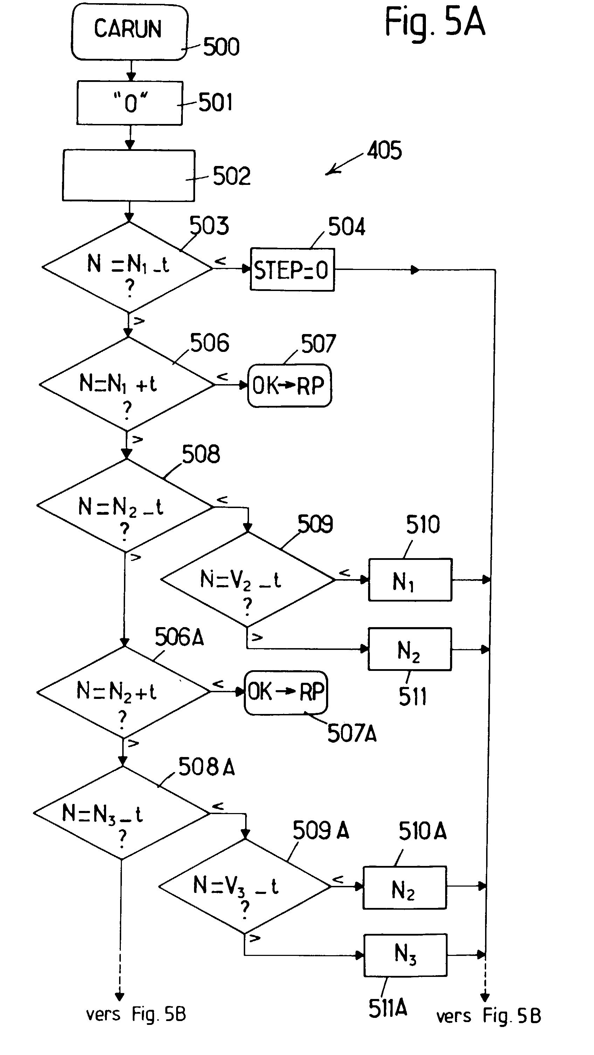

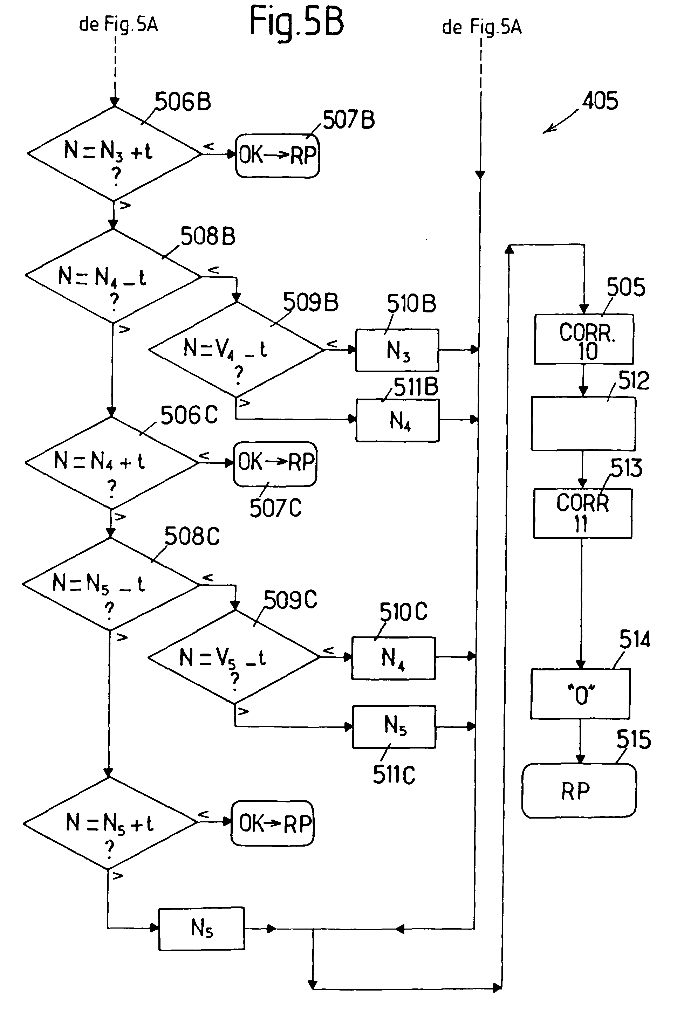

Le programme principal commence en 401 par un sous-programme 402 d'initialisation des composants du dispositif de commande. Ce sous-programme est déclenché dès que le conducteur a tourné la clé de contact du véhicule. En 403, le programme contrôle la position de l'embrayage 7 pour vérifier s'il est correctement serré. En effet, il est à noter que cet embrayage est normalement serré et que le dispositif de commande procède à son desserrage seulement lorsqu'un changement de rapport de vitesses est commandé. L'opération exécutée en 404 est destinée à placer l'arbre 11 dans la position correspondant à celle dans laquelle les contre-cames 44 sont levées pour libérer l'arbre 10. Ce dernier est placé dans sa position neutre grâce à l'exécution en 405 d'un sous-programme CARUN qui sera décrit plus en détail ci-après en se référant aux figures 5A et 5B.

Le programme principal passe alors à un sous-programme START en 406 qui commande la procédure de démarrage du moteur 3. Cette procédure étant classique, elle ne sera pas décrite en détail.

En 407, un test est effectué pour déterminer si le moteur 3 a effectivement démarré. Dans l'affirmative, le programme principal passe à l'étape suivante; sinon il retourne à l'opération 403.

En 408, le programme principal vérifie si le frein de parcage est serré. Dans l'affirmative, le programme entre dans un sous-programme PARK en 409 pour actionner le frein à main. Ce sous-programme ne présente pas de particularité et il ne sera donc pas décrit en détail.

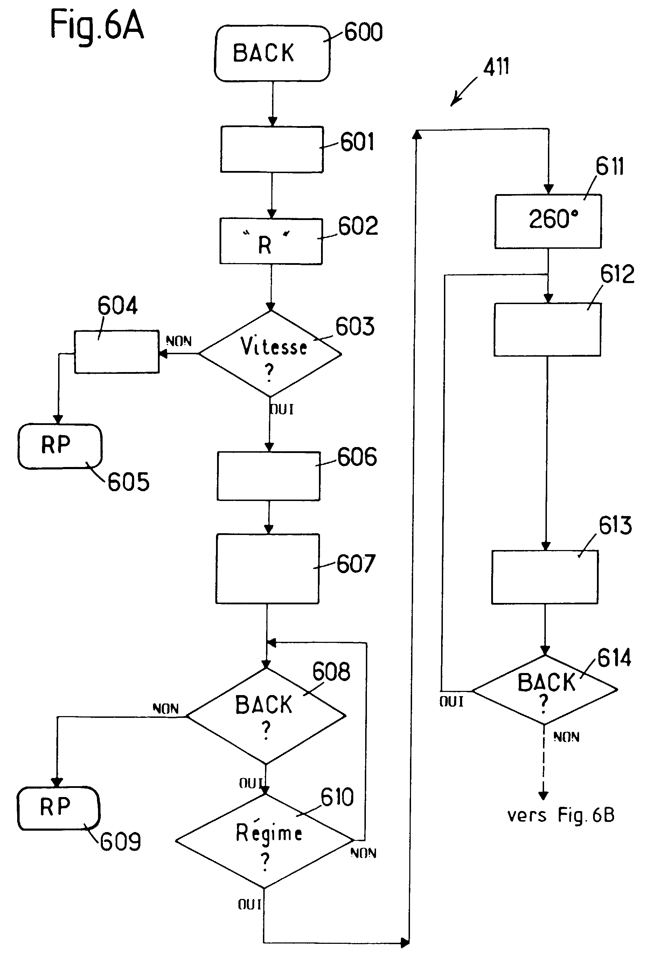

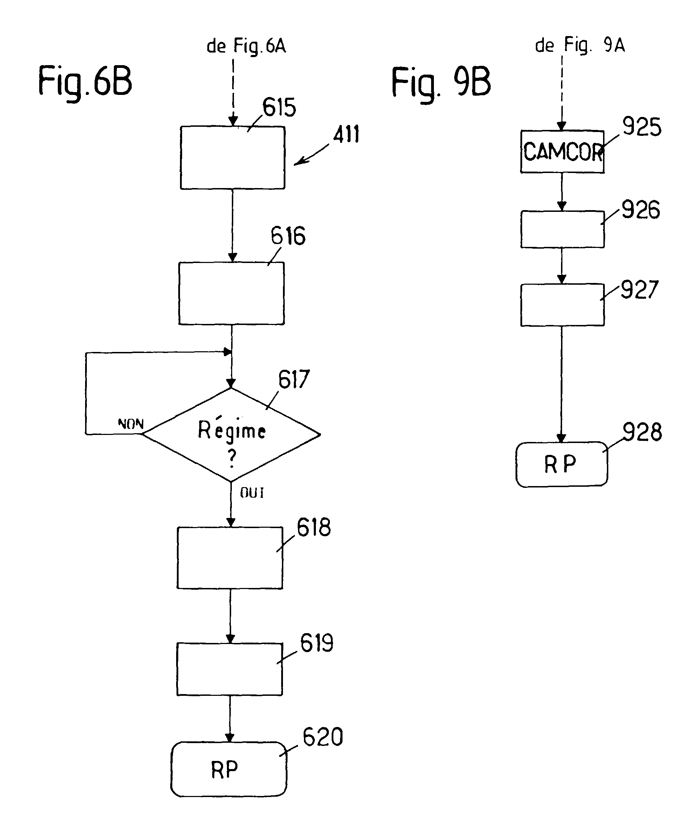

En 410, le programme principal effectue un test pour vérifier si la marche-arrière R est sélectionnée sur le levier de commande. Dans l'affirmative, le programme entre dans un sous-programme BACK en 411 qui sera décrit en détail par la suite en se référant aux figures 6A et 6B.

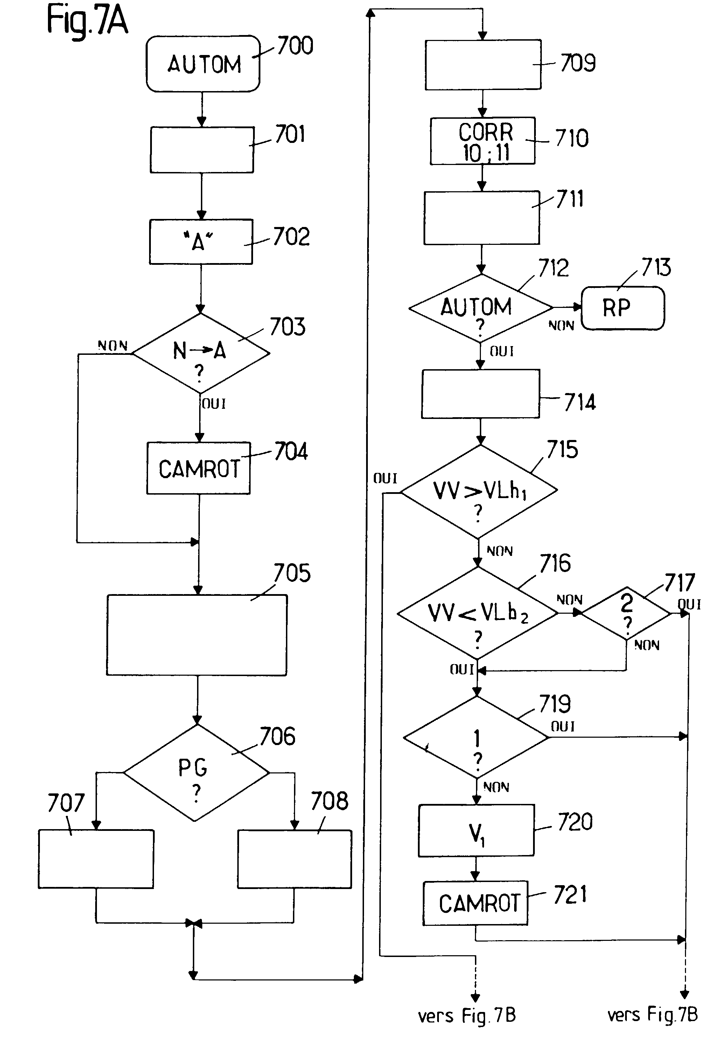

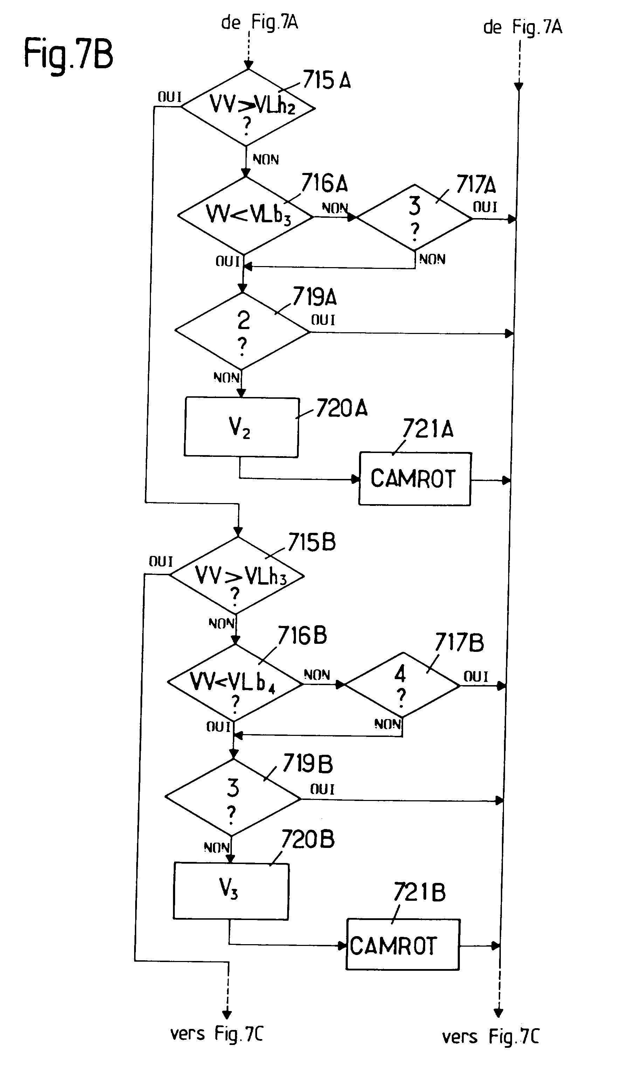

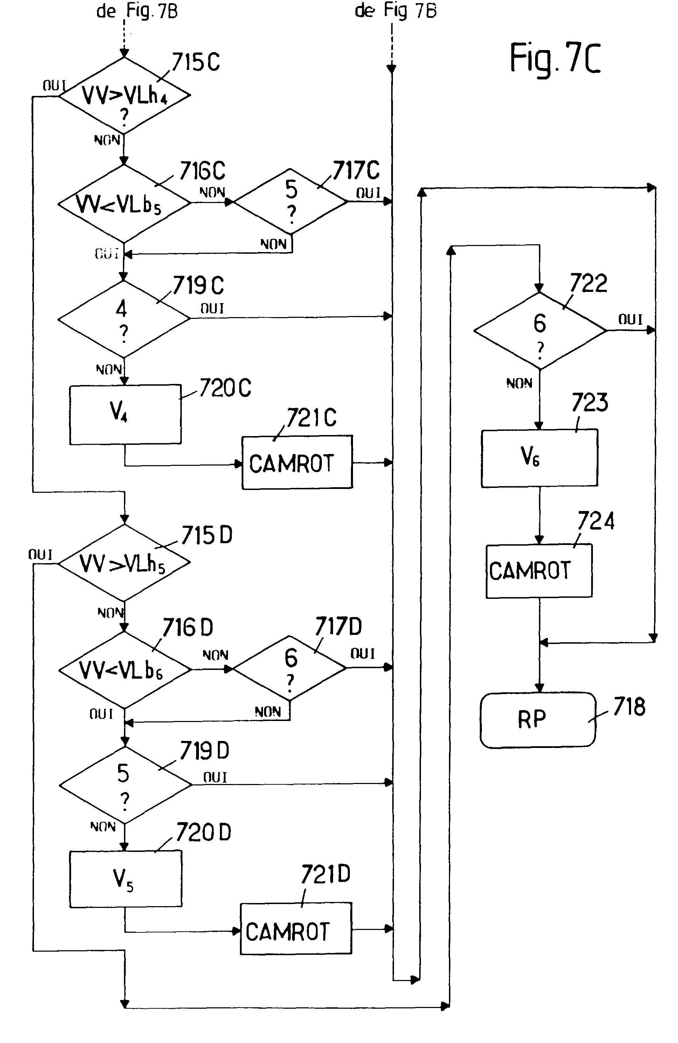

En 412, le programme principal effectue un test pour vérifier si le levier de commande est placé sur la position automatique A. Dans l'affirmative, le programme entre en 413 dans un sous-programme AUTOM qui sera décrit ci-après à-propos des figures 7A, 7B et 7C. Sinon, le programme passe à l'étape suivante.

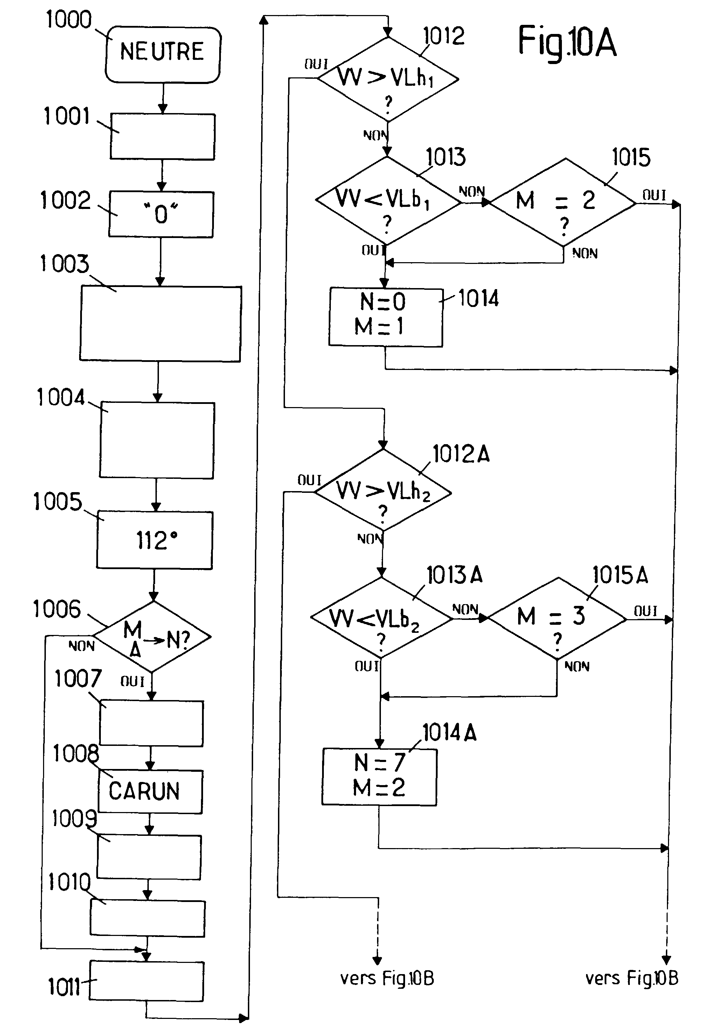

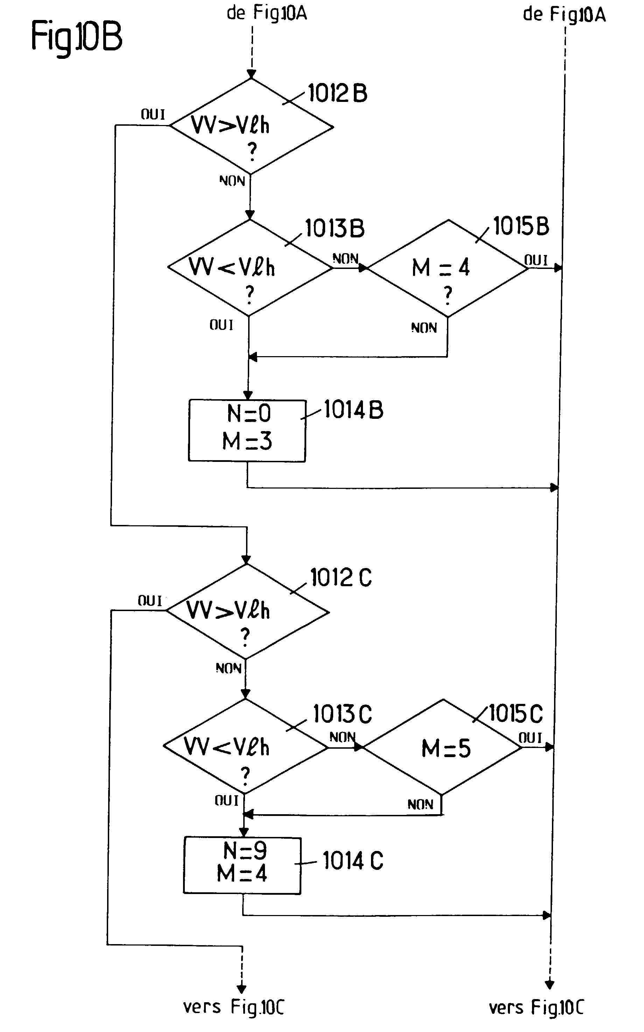

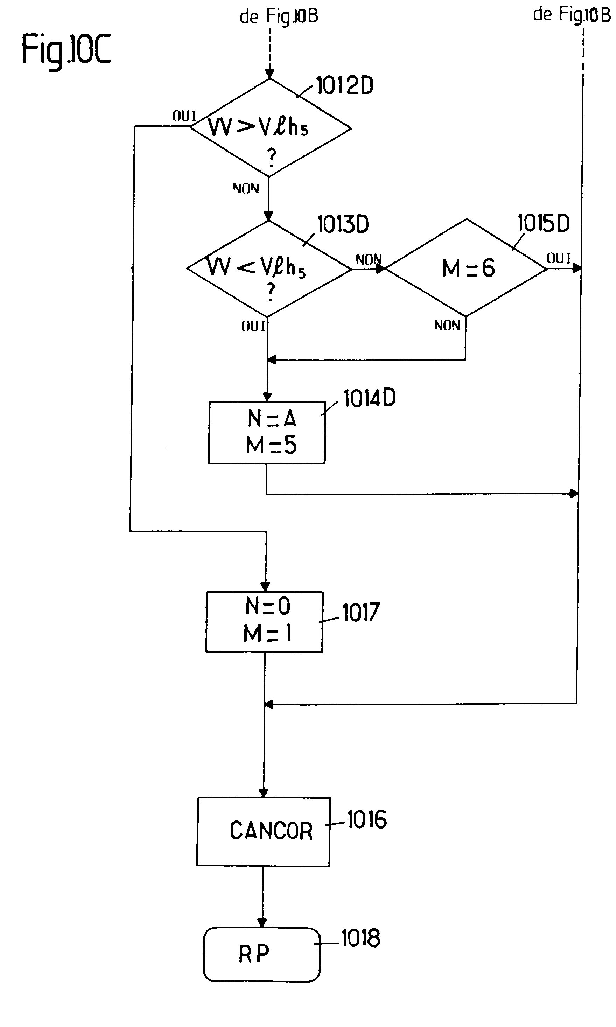

Celle-ci consiste à tester en 414 si le levier de vitesses se trouve dans une position neutre ou de point mort N. S'il en est ainsi, le programme passe dans un sous-programme 415 appelé NEUTRE destiné à placer la boîte de vitesses dans l'une des positions neutres. Ce sous-programme est décrit ci-après par référence aux figures 10A, 10B et 10C.

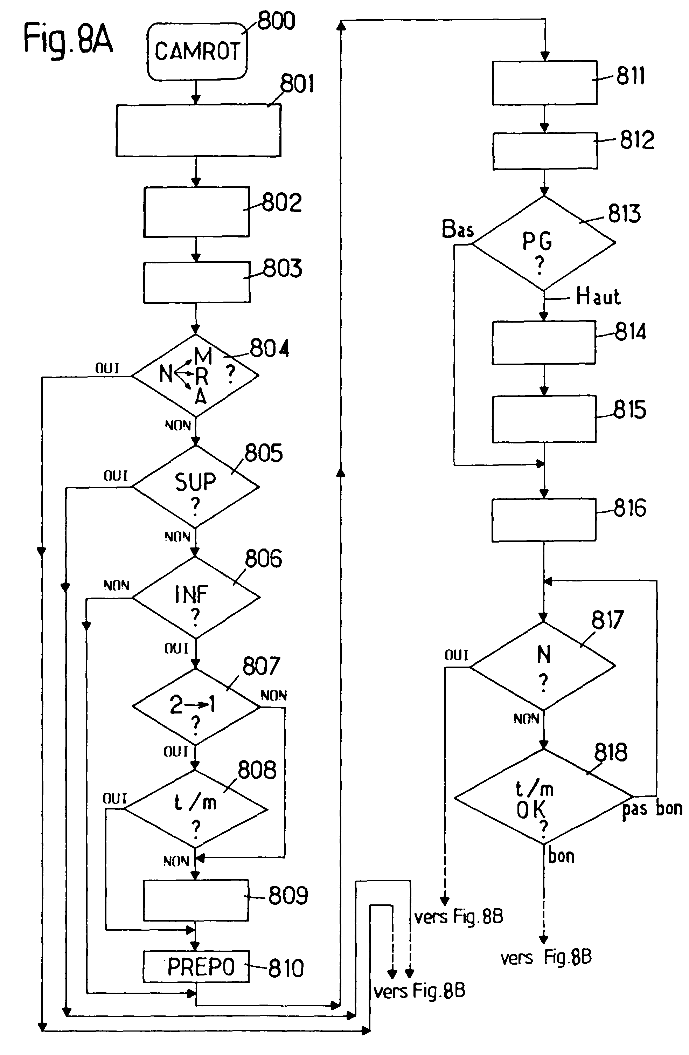

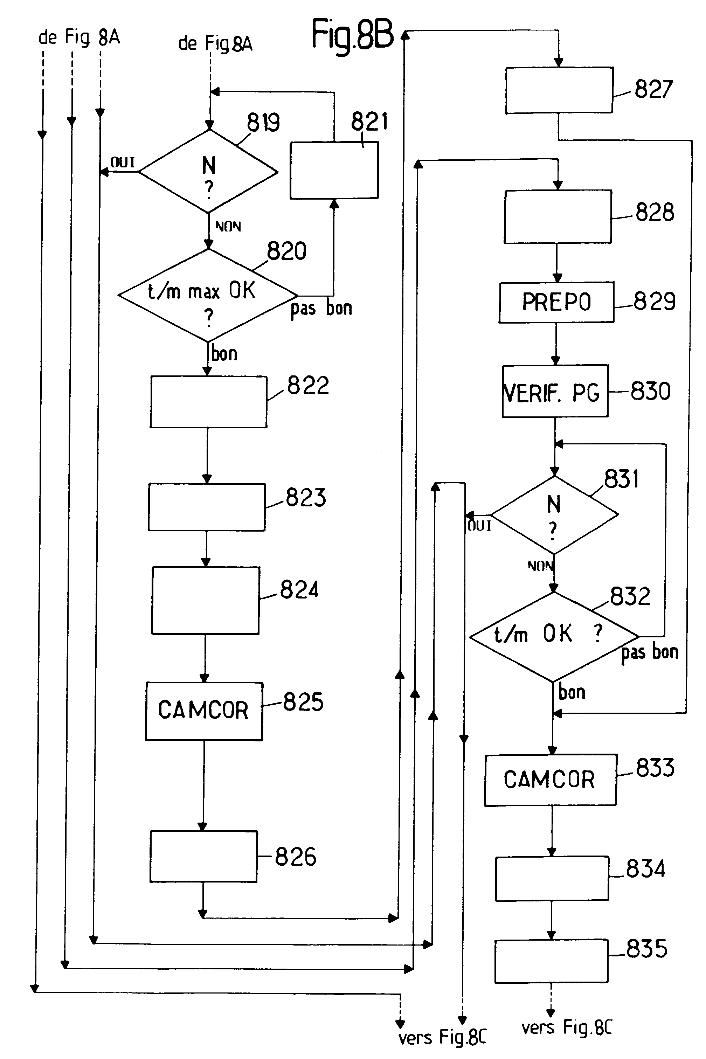

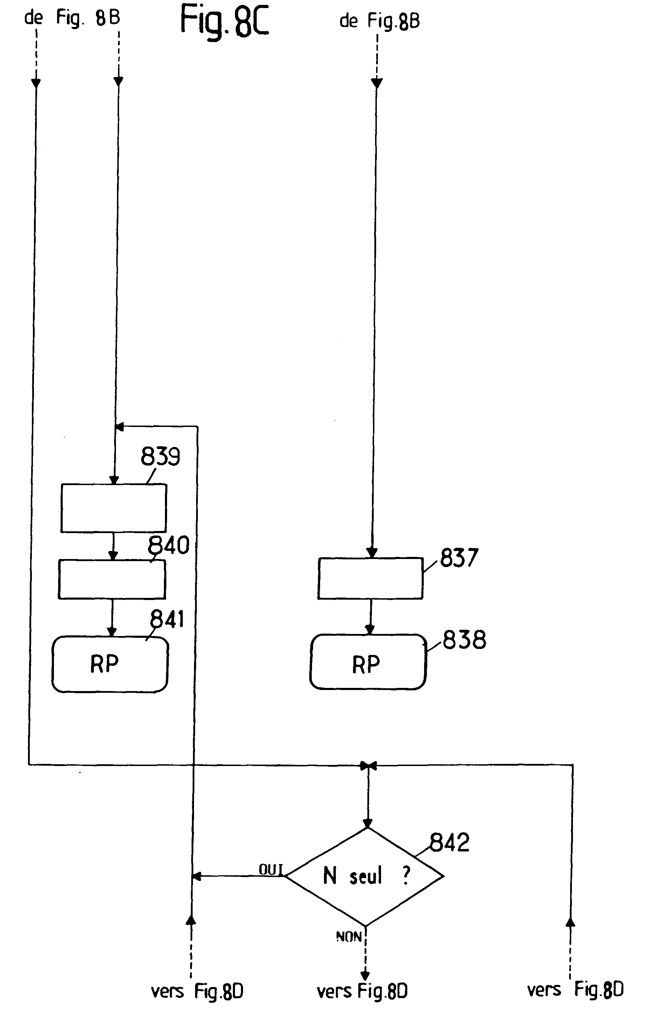

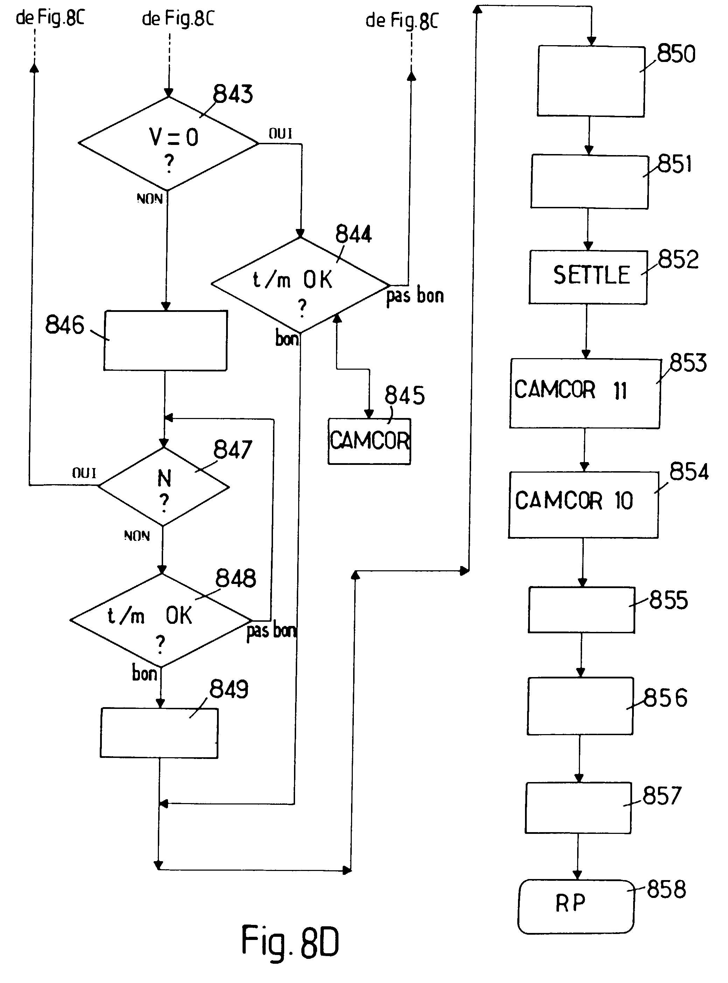

Si le résultat du test en 414 est négatif, le programme principal passe à un autre test en 416 pour vérifier si le levier de commande est placé sur une position de sélection de rapport de vitesses. Dans l'affirmative, le programme principal passe en 417 dans un sous-programme CAMROT permettant de passer la boîte de vitesses dans un rapport de vitesses provisoire qui est automatiquement déterminé en fonction de la vitesse du véhicule. Le sous-programme CAMROT est décrit en détail ci-après en se référant aux figures 8A à 8D.

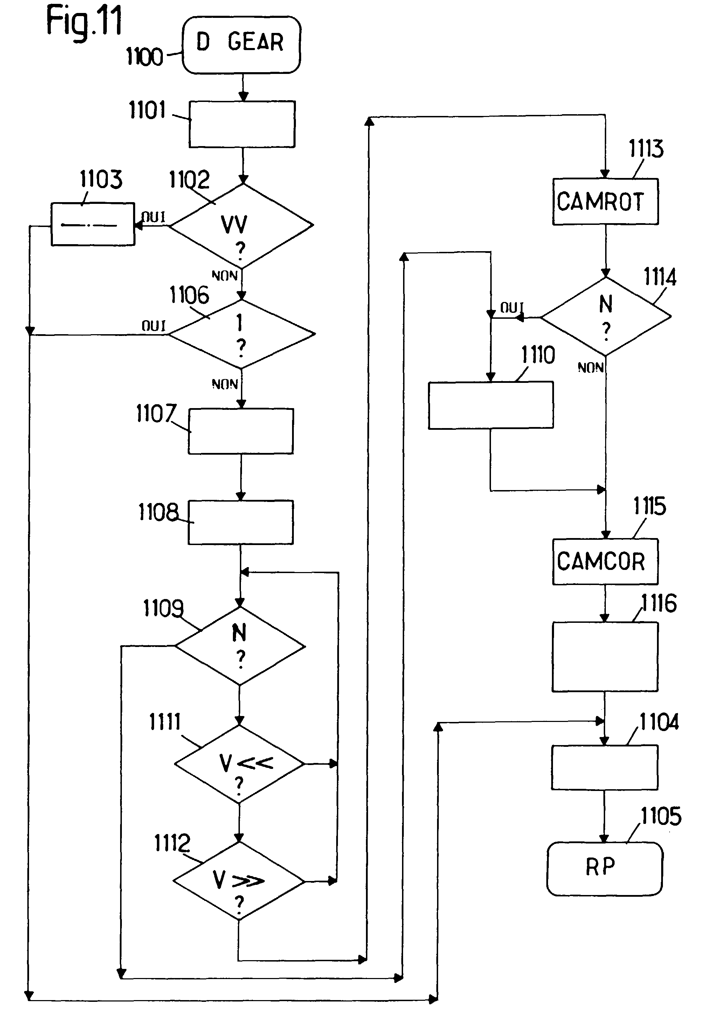

Dans le cas où le test en 416 s'avère négatif, le programme passe en 418 pour vérifier si le levier de commande ou sélection des rapports à été amené vers la position INF de descente de rapport. S'il en est ainsi, le programme passe en 419 dans un sous-programme DGEAR pour commuter vers le rapport inférieur. Ce sous-programme est décrit en détail ci-après en faisant référence à la figure 11. Si, au contraire, le test s'avère négatif, le programme principal passe en 420 où un test est effectué pour vérifier si le levier de commande a été amené vers la position SUP de montée des rapports. S'il en est ainsi, le programme passe en 421 à un sous-programme UGEAR qui assure la commutation de la boîte de vitesses vers le rapport supérieur.

Si le test en 420 est négatif, le programme principal reboucle sur l'étape 407. Il en est de même en ce qui concerne les sous-programmes PARK, BACK, AUTOM, NEUTRE, DGEAR et UPGEAR qui, lorsqu'ils ont été exécutés, rebouclent sur l'étape 407 du programme principal.

On va maintenant décrire le sous-programme CARUN en se référant plus particulièrement aux figures 5A et 5B. Ce sous-programme est exécuté lors de la mise en marche du moteur 3 et également au cours de l'exécution du sous-programme NEUTRE, comme on le verra par la suite. Il permet en particulier de placer l'arbre 10 dans une position dans laquelle l'arbre 11 peut retirer les contre-cames 42, 43 et 44 des rainures respectives de l'arbre 10 afin de préparer celui-ci à une rotation libre vers la position voulue. En effet, dans certaines configurations de conduite, et éventuellement également lors de la mise en marche du véhicule, la position angulaire de l'arbre 10 pourrait être telle que les contre-cames soient légèrement coincées dans les rainures et ne sortent pas de celles-ci, même si en principe la position de l'arbre 11 devrait le permettre.

Pour comprendre le déroulement du sous-programme CARUN, il convient de rappeler que la boîte de vitesses selon l'invention comprend plusieurs positions neutres (cinq en l'occurrence) qui correspondent aux positions intermédiaires des fourchettes 29, 30 et 31 (figure 1) dans lesquelles celles-ci maintiennent les baladeurs 26, 27 et 28 entre les pignons qu'elles sont destinées à coupler entre eux pour engager les rapports de vitesses.

Il est également à noter que les positions de l'arbre 10 qui sont au nombre de onze, sont numérotées par convention de 1 à 6 pour les rapports de vitesses et de 7 à B (en hexadécimal) pour ce qui concerne les positions neutres, étant entendu que la position neutre se trouvant entre les positions situées entre les rapports 1 et 2 est désignée par 0, et que la position entre les positions 1 et 6 n'est pas utilisée.

Chacune de ces positions est représentée par une valeur d'angle, ces valeurs étant espacées de 30° les unes des autres. Par ailleurs, le moteur 51 peut positionner l'arbre 10 par pas d'environ 1,3°, cette valeur représentant également la résolution maximale avec laquelle l'arbre 10 peut être positionné.

Dans l'exemple représenté et décrit, le sous-programme CARUN doit donc pouvoir constater si l'arbre 10 se trouve dans l'une des six positions neutres, la vérification étant réalisée en examinant la position angulaire de l'arbre 10 avec une certaine précision (environ 5° de part et d'autre des position nominales), ce qui se fait en mesurant le potentiel du curseur du potentiomètre 62 (figure 2).

Le sous-programme CARUN est initié en 500 (figure 5A). En 501, le programme affiche une information sur l'affichage 66 (en l'occurrence un "0" clignotant) pour signaler que le système contrôle un éventuel blocage des arbres 10 et 11 et remédie à ce blocage.

En 502, la valeur angulaire instantanée N de la position de l'arbre 10 est mise en mémoire. Puis, cette valeur est examinée au cours de plusieurs tests pour constater si elle se trouve dans des limites de tolérance prédéterminées autour de la valeur nominale angulaire de la position neutre considérée.

Ainsi, un test est tout d'abord effectué en 503 pour déterminer si la position angulaire réelle de l'arbre 10 est inférieure ou supérieure à la valeur nominale (30°) de la position neutre N1 entre les positions correspondant aux rapports 1 et 2 (0° et 60°, respectivement), moins la valeur de tolérance (t) prédéterminée (5,2° dans l'exemple). Si la valeur mesurée est inférieure à cette valeur N1-t (24,8°), le programme introduit en 504 la valeur angulaire de la position neutre N1 dans la mémoire de travail du microprocesseur, puis saute à l'opération 505 (figure 5B) pour faire tourner l'arbre 10 vers la position neutre N1, dans laquelle un déblocage des contre-cames peut avoir lieu sans difficulté. Il est à noter que ce déblocage peut facilement être réalisé pour toutes les positions neutres nominales de l'arbre 10.

Si le test en 503 montre que la valeur N est supérieure à la précédente valeur N1-t, le programme passe au test suivant en 506 pour déterminer si la valeur N est inférieure à la valeur nominale du neutre N1, majorée de la valeur de tolérance t (dans l'exemple 35,2°). Si c'est le cas, le programme passe à l'étape 507 pour retourner au programme principal. En effet, dans ces conditions, on est certain que le déblocage (ou en d'autres termes le retrait des contre-cames) peut facilement avoir lieu.

Si la valeur réelle est au contraire supérieure à la valeur N1+t, le programme effectue un nouveau test en 508 pour examiner la valeur N2-t, N2 étant la position située entre les positions correspondant aux rapports 2 et 3. Si le test en 508 établit que la valeur nominale est la plus petite des deux valeurs comparées, la position de l'arbre 10 doit être corrigée. Cependant, le système doit encore établir dans quelle sens cette correction doit intervenir, ou autrement dit dans quelle direction l'arbre 10 doit être tourné. C'est pourquoi le programme effectue un test en 509 pour comparer la valeur N à la valeur V2-t, V2 étant la position nominale pour le rapport de vitesses 2. Si N est inférieure à cette valeur, cela veut dire que l'arbre 10 doit être tourné dans le sens de la position N1. Dans le cas contraire, il doit être tourné vers la position N2. Suivant le cas, le programme passe donc sur une opération d'acquisition de la valeur N1 ou de la valeur N2, respectivement en 510 et 511, après quoi le programme saute sur l'étape 505 pour effectuer réellement le bon positionnement de l'arbre 10.

Il se peut cependant que, le véhicule roulant dans un certain rapport de vitesses, il doive être arrêté brusquement et que son moteur cale. La boîte de vitesses restera alors dans le rapport qui était engagé en dernier et il se peut que, dans ces conditions, il se produise aussi un blocage des contre-cames. C'est pourquoi le sous-programme CARUN permet également d'obtenir un déblocage pour des rapports de vitesses plus élevés. Le processus que l'on vient de décrire en ce qui concerne le neutre N1 peut donc se dérouler pour toutes les positions neutres, si le nombre N est supérieur à N2-t. Les figures 5A et 5B montrent donc tous les cycles qui peuvent ainsi être effectués, les opérations correspondantes régies par le sous-programme ayant été désignées par les mêmes références numériques que celles du premier cycle en les affectant d'un indice littéral.

Il est clair que chacun de ces cycles du sous-programme CARUN aboutit à l'opération 505 plaçant l'arbre 10 dans l'une des positions nominales de neutre dans lesquelles les contre-cames de l'arbre 11 peuvent facilement être retirées.

L'opération 505 est suivie d'une opération de stabilisation en 512 permettant un positionnement précis de l'arbre 10, puis d'une opération de correction en 513 de la position de l'arbre 11 pour s'assurer que ce dernier se trouve dans la position (à 112° dans l'exemple décrit) correspondant au retrait des contre-cames. En 514, l'affichage est maintenu à sa configuration "0" et en 515, le sous-programme CARUN retourne au programme principal. On va maintenant se référer aux figures 6A et 6B pour décrire le sous-programme BACK (étape 411 de la figure 4). On rappelle que ce sous-programme est exécuté, lorsqu'au cours du test 410 (figure 4), le système a constaté que la marche arrière est sélectionnée par le conducteur du véhicule (position R du levier de commande). On rappelle également que, comme décrit dans la demande de brevet précitée, la marche arrière est mécaniquement enclenchée lorsque l'arbre 11 se trouve dans une position angulaire particulière (260° dans l'exemple décrit).

Par conséquent, le test 410 s'étant avéré positif, le sous-programme BACK est initié en 600 (figure 6A). Cette opération est suivie en 601 d'une procédure d'anti-rebond sur le contact du levier, puis en 602 d'une commande d'affichage "R" sur l'affichage 66. En 603, un test est effectué pour déterminer si la vitesse du véhicule est compatible avec l'engagement de la marche arrière. Si cette vitesse est trop élevée (c'est-à-dire plus grande qu'une très faible valeur de 3 km/h, par exemple), le programme passe en 604 où l'affichage 66 clignote, signalant au conducteur qu'il roule encore trop vite. Le système sort alors de ce sous-programme en 605 et retourne au programme principal.

Si le test en 603 s'avère positif, le sous-programme 411 passe en 606 à une opération de desserrage de l'embrayage 7. Celle-ci est suivie d'une étape 607 fixant un certain délai pour donner à l'embrayage le temps de se desserrer. En 608, un nouveau contrôle est effectué pour vérifier si la marche arrière a bien été sélectionnée. Si ce test s'avère négatif, le programme passe en 609 pour retourner vers le programme principal. Sinon, en 610, un test est effectué pour vérifier si le régime du moteur du véhicule se trouve à une valeur (inférieure à 2000 t/m, par exemple) compatible avec le passage en marche arrière. Si le test s'avère négatif, le programme retourne sur l'opération 608 pour un nouveau test. Dès que le régime du moteur est compatible, le sous-programme 411 passe à une opération 611 au cours de laquelle la valeur angulaire de 260° pour laquelle l'arbre 11 est en position de marche arrière, est mise dans le mémoire de travail du microprocesseur, puis en 612, l'arbre 11 est tourné vers la position de marche arrière, opération qui est suivie par le serrage de l'embrayage en 613. Le conducteur du véhicule peut alors effectuer sa marche arrière.

Le sous-programme 411 entre ensuite dans une boucle d'attente qui se termine lorsque en 614 un test détermine que le levier de commande a quitté la position de marche arrière, autrement dit que le conducteur veut enclencher un rapport de marche avant. Si le test en 614 répond que la position du levier n'a pas changé, le programme se reboucle. Dans le cas contraire, l'embrayage est commandé dans le sens du desserrage en 615 suivi d'un opération d'attente en 616 pour lui donner le temps de se desserrer.

Le programme se poursuit en 617 pour contrôler le régime du moteur du véhicule qui doit baisser jusqu'au régime de ralenti afin que l'arbre 11 puisse être ramené à la position (à 112°, par exemple) dans laquelle les contre-cames sont sorties des rainures correspondantes de l'arbre 10. Le test est effectué autant de fois que nécessaires tant que le régime adéquat n'est pas atteint. Dès que le test en 617 s'avère positif, la valeur angulaire (de 112°) est mise dans la mémoire de travail du microprocesseur (opération 618). Puis, en 619, le moteur d'entraînement 52 de l'arbre 11 est actionné pour placer celui-ci dans la position voulue (de 112°). Le système sort alors du sous-programme 411 pour reboucler sur le programme principal en 620.

On va maintenant se référer aux figures 7A, 7B et 7C pour décrire le déroulement du sous-programme AUTOM qui est l'étape 413 du programme principal. On rappelle que le système entre dans ce sous-programme en réponse à un test effectué sur la position A du levier de commande de la boîte accessible au conducteur du véhicule.

Le programme AUTOM est initié en 700 à l'issue du test 412. En 701 un contrôle anti-rebond est effectué, puis en 702, l'affichage est commandé pour qu'il affiche la lettre "A" pour signaler au conducteur du véhicule que l'automatisme a été sélectionné.

En 703, un test est effectué pour vérifier si la configuration précédente était l'une des positions neutres ou non. En effet, il se peut qu'un mode manuel, on était à l'une des positions neutres de la boîte et que néanmoins la voiture roulait à une certaine vitesse. L'automatisme doit alors placer la boîte dans le rapport qui qui correspond à cette vitesse du véhicule. Si le test s'avère positif, le sous-programme AUTOM passe dans le sous-programme CAMROT (opération 704) qui permet de placer la boîte dans le rapport nécessaire. Ce dernier sous-programme sera examiné plus loin en faisant référence aux figures 8A à 8D.

La boîte étant ainsi dans le rapport qui correspond à la vitesse du véhicule, on fait en 705 l'acquisition des paramètres de position des moteurs d'asservissement 51 et 52 et donc des arbres 10 et 11. Au cours de cette opération, on affecte aussi une tolérance plus serrée de positionnement à ces paramètres, compatible avec une commande convenable de la mécanique de la boîte de vitesses.

Les paramètres de position des moteurs 51 et 52 étant ainsi acquis, on les confronte à des données relatives à la position instantanée de la pédale des gaz PG du véhicule. Outre de commander le débit du mélange combustible introduit dans le moteur du véhicule, la pédale PG est aussi conçue pour donner une information de position représentative de ce que le conducteur souhaite ralentir ou, au contraire, accélérer le véhicule.

Ainsi, la course de la pédale d'accélérateur est divisée en deux parties et un interrupteur est associé à la pédale. Cet interrupteur change d'état au passage de la pédale d'une partie de la course vers l'autre et inversement, et le microprocesseur interprète cela comme une information "pédale relevée" ou "pédale enfoncée".

La position de la pédale PG est testée en 706 et suivant le résultat de ce test, l'une ou l'autre de deux tables de valeurs, respectivement une table de "ralentissement" 707 et une table d'"accélération" 708, sont chargées dans la mémoire de travail du microprocesseur.

Il est noter qu'en variante, la pédale d'accélérateur peut être équipée d'un capteur de position (un potentiomètre, par exemple) fournissant une gamme continue de valeurs de position que le microprocesseur pourra traiter convenablement

Le sous-programme passe ensuite en 709 à un contrôle de la position d'embrayage et place ce dernier, le cas échéant, dans la configuration de serrage. Puis, en 710, les positions des arbres 10 et 11 sont contrôlées et, le cas échéant, ces positions sont ajustées à leurs valeurs nominales selon les sous-programmes de correction déjà décrits à propos des étapes 505 et 513 du sous-programme CARUN.

L'opération suivante 711 consiste à contrôler les paramètres de fonctionnement de l'alternateur qui est couplé au moteur du véhicule pour fournir l'énergie électrique nécessaire, comme cela est bien connu dans la technique. Il est à noter ici que dans le cas de l'invention, le fonctionnement de cet alternateur n'est pas tout à fait classique puisque, dans certains conditions de fonctionnement de l'ensemble du moteur du véhicule et de la boîte de vitesse qui y est associée, l'alternateur doit être coupé du réseau électrique qu'il alimente. Ce fonctionnement particulier sera décrit par la suite.

En 712, un test est effectué pour vérifier une nouvelle fois la position du levier de commande. S'il est resté dans la positon d'automatisme A, le sous-programme AUTOM continue à ce dérouler. Sinon, le système sort de ce sous-programme en 713 et retourne au programme principal.

En 714, le système fait l'acquisition d'une valeur représentant la vitesse instantanée du véhicule, puis le sous-programme entre dans une étape de sélection automatique des rapports de vitesses.

Avant de décrire le déroulement de cette sélection automatique, il convient d'abord de noter que les tables 707 et 708 contiennent pour chaque rapport de vitesses deux valeurs limites, respectivement haute (VLh) et basse (VLb) situées de part et d'autre de la valeur VN de vitesse nominale du véhicule qui serait idéale pour opérer le changement de rapport. Il est à noter en outre que les plages de vitesses fixées par lesdites limites se recouvrent d'un rapport à l'autre. Ainsi, par exemple, la valeur VLh1 qui est donc la valeur limite supérieure de la plage concernant le rapport 1 est supérieure à la valeur inférieure de la plage de vitesses correspondant au rapport 2. Cette organisation des valeurs est valable pour les deux tables encore que les valeurs d'un rapport déterminé puissent différer dans les deux tables, les changements de rapports n'étant pas effectués pour les mêmes vitesses du véhicule, suivant que celui-ci accélère ou ralentit. La raison du recouvrement des plages de vitesses dans chaque table est qu'il faut éviter une "hésitation" dans la commande des changement de rapports à défaut de quoi le fonctionnement de la boîte serait instable. Les pas de programme qui vont maintenant être décrits sont donc identiques, quelle que soit la table de valeurs qui a été sélectionnée en fonction de la position de la pédale d'accélérateur. Seules les valeurs des vitesses changent suivant ces deux cas.

Ceci étant, on va se reporter de nouveau à la figure 7A, où on voit qu'en 715 un test est effectué pour déterminer si la vitesse VV du véhicule est supérieure à la valeur-VLh1 de l'une ou de l'autre table 707 ou 708, étant rappelé que la table est choisie en fonction de la position de la pédale d'accélérateur au moment considéré.

Si la réponse au test 715 est "non", le programme passe au test suivant en 716 pour déterminer si la vitesse VV est inférieure à la valeur VLb2. Si la réponse est "non", le programme passe à un autre test en 717 pour vérifier si la boîte est déjà dans le rapport 2. En cas de réponse positive, le sous-programme reboucle en 718 (figure 7C) sur le programme principal et le véhicule continue à rouler avec le rapport 2 engagé tant qu'un nouvel événement ne se soit pas produit.

En cas de réponse positive au test 716 ou de réponse négative au test 717, le programme passe au test 719 pour vérifier si le rapport 1 est engagé. Si c'est le cas, le sous-programme reboucle en 718 sur le programme principal et le véhicule continue à rouler avec le rapport 1 engagé. Sinon, le sous-programme passe à l'opération 720 qui consiste à mettre dans la mémoire de travail du microprocesseur la valeur de la position angulaire de l'arbre 10 correspondant au rapport 1. Puis, le système s'engage en 721 dans un sous-programme CAMROT qui conduit au passage de la boîte dans le rapport 1, à partir de n'importe quel autre rapport dans lequel la boîte était engagée. Si la réponse au test 715 s'avère affirmative, le sous-programme AUTOM passe directement à un test 715A pour commencer une procédure analogue à celle qui vient d'être décrite, mais cette fois-ci en ce qui concerne le rapport 2, ainsi de suite jusqu'au rapport 6.

Les diverses opérations de ces procédures ou cycles de passage de rapports ne sont donc pas décrites en détail; sur les figures, elles ont été désignées chaque fois par des références numériques suivies d'un indice littéral.

A la fin de la procédure concernant le rapport 5, le sixième rapport peut être engagé mais, bien entendu, sans vérifier l'engagement d'un rapport supérieur. Les opérations correspondantes ont été désignées respectivement par les références 722, 723 et 724.

On va maintenant décrire le sous-programme CAMROT en se référant aux figures 8A à 8D. Le sous-programme est initié en 800. En 801, le dispositif de commande électronique DCE met en mémoire une table qui définit pour chaque rapport de la boîte 3 une valeur de régime du moteur 3 prédéterminée. Chacune de ces valeurs correspond à un régime approprié pour que le passage vers ce rapport puisse se faire avec la meilleure synchronisation possible.

Puis en 802, le convertisseur de couple 6 est mis hors fonction. En 803, l'embrayage 7 est commandé pour se desserrer.

En 804, un test est effectué pour déterminer si le conducteur a modifié le levier de commande vers la position M, R ou A. Si ce n'est pas le cas, le programme passe à un test en 805 pour vérifier si la boîte doit passer dans un rapport de vitesses supérieur, comparé au rapport dans lequel elle est placée au moment considéré.

Si la réponse au test 805 est négative, un autre test est effectué en 806 pour vérifier si la boîte doit passer dans le rapport de vitesses inférieur. Si la réponse au test 806 est positive, le système effectue un autre test en 807 pour vérifier si la boîte doit être rétrogradée du rapport 2 au rapport 1. Si la réponse à ce test est affirmative, un test est effectué en 808 pour vérifier si le régime du moteur du véhicule est compatible avec ce passage de rapport.

Si la réponse au test 808 est négative, une commande est élaborée en 809 pour, d'une part, actionner le volet d'air 86 (figure 3) à l'ouverture et, d'autre part, couper l'alternateur du réseau électrique du véhicule, cette commande ayant pour effet la montée très rapide du moteur vers le régime maximal. Si la réponse au test 807 est négative, le test 808 est sauté et le système passe immédiatement à la commande 809. Si la réponse au test 808 est affirmative, le système entre dans un sous-programme PREPO en 810, ce qu'il fait également après l'exécution de la commande 809 en cas de réponse négative au test 808. Le sous-programme PREPO sera décrit en détail par la suite; il suffit de noter ici qu'il est destiné à faire tourner l'arbre 10 vers la position angulaire du neutre qui se trouve le plus près possible de la position angulaire de l'arbre 10 correspondant au rapport à engager.

Au cas où le test 806 reçoit une réponse négative (c'est-à-dire aucun changement de rapport n'est nécessaire), les tests 807 et 808, ainsi que la commande 809 et le sous-programme PREPO sont sautés.

Dans ce dernier cas et également à l'issue du sous-programme PREPO, le programme commande un délai d'attente en 811, après quoi l'embrayage est serré en 812 (il était débrayé depuis l'opération 803).

L'opération 812 étant terminée, un test est effectué en 813 pour vérifier dans quelle position se trouve la pédale d'accélérateur PG. Si ce test reçoit une réponse "haut" (c'est-à-dire la pédale est enfoncée pour obtenir un haut régime du moteur 3), le programme passe à une opération 814 qui consiste à couper l'alimentation en carburant du moteur du véhicule afin d'éviter son emballement. L'opération 814 est suivie d'une opération 815 imposant un délai d'attente nécessaire, le cas échéant, pour réduire le régime du moteur. Puis en 816, l'alimentation en carburant est de nouveau autorisée pour que le moteur puisse continuer à tourner à un régime plus faible.

Si la réponse au test en 813 est "bas" (pédale relevée), les opérations 814 et 815 sont sautées et l'opération 816 est exécutée immédiatement.

L'opération 816 est suivie d'un test en 817 pour vérifier une nouvelle fois si le levier de commande ne se trouve pas dans la position neutre. Si tel n'est pas le cas, un test est effectué en 818 pour vérifier si, à partir de la valeur du régime correspondant au rapport engagé jusque-là, le régime du moteur a augmenté ou diminué correctement pour que le changement de rapport puisse avoir lieu. Ce test 818 est effectué en rebouclage tant que le régime n'a pas atteint la bonne valeur.

En 819, un test est une nouvelle fois effectué pour vérifier si le levier ne se trouve pas dans la position neutre. Puis en 820, par mesure de sécurité, le programme contrôle le régime du moteur pour vérifier s'il ne dépasse pas la valeur maximale de sécurité imposée (7000 t/m, par exemple). Dans l'affirmative, le programme reboucle alors sur une opération 821 de fermeture du volet d'air 86 et de rétablissement de l'alimentation en carburant pour que le régime du moteur puisse redescendre vers une valeur autorisée. A l'issue de cette partie du programme, le moteur a donc atteint le régime approprié pour que le nouveau rapport puisse être engagé, les arbres primaire et secondaire 8 et 9 tournant alors à des vitesses telles que la vitesse périphérique des pignons soit équivalente. Ce rapport est affiché sur l'affichage 66 au cours de l'opération 822.

L'opération 823 consiste à débrayer de nouveau, puis après un temps d'attente établi en 824, le sous-programme CAMCOR est exécuté en 825 pour placer l'arbre 10 dans la position angulaire correcte. Ensuite, l'embrayage est serré en 826 et après un nouveau temps d'attente en 827, le sous-programme CAMROT passe dans sa phase finale qui va être décrite par la suite.

Avant de décrire cette phase finale, il convient d'examiner les opérations qui se déroulent lorsqu'un rapport supérieur doit être engagé. Ces opérations sont exécutées, lorsque le test en 805 dégage une réponse affirmative et elles commencent par un temps d'attente en 828 suivi en 829 de l'exécution du sous-programme PREPO qui sélectionne la position neutre de l'arbre 10 située le plus près du rapport à engager. Cette étape est suivie en 830 d'une opération de contrôle de la position de la pédale PG selon un sous-programme VERIF PG qui ne sera pas décrit en détail. Ce sous-programme a pour but de forcer la valeur de position de la pédale à la valeur basse pour éviter un emballement du moteur.

Le sous-programme CAMROT s'engage ensuite en 831 dans un test de vérification de la position du levier de commande, puis en 832 dans une boucle de contrôle du régime du moteur dans laquelle le programme reste tant que ce régime n'ait pas atteint la valeur voulue correspondant au rapport à engager. Dès que ce régime est atteint, le sous-programme passe dans sa phase finale.

Celle-ci commence en 833 par le sous-programme CAMCOR qui place l'arbre 10 dans la position angulaire exacte voulue pour autant qu'il ne l'ait pas encore été auparavant.

L'exécution du sous-programme CAMCOR est suivie en 834 par une opération de fermeture du volet d'air 86 et en 835 par le serrage de l'embrayage pour autant que ceci n'ait pas été fait auparavant. En 837, on s'assure que l'alimentation en carburant soit rétablie et le système sort du sous-programme CAMROT en 838.

Si les tests 817, 819 et 831 reçoivent une réponse affirmative, le sous-programme CAMROT est interrompu en passant immédiatement à l'opération 839 qui consiste à fermer le volet d'air 86, suivie d'une opération en 840 de rétablissement de l'alimentation en carburant après quoi, le système sort du sous-programme en question en 841.

Lorsque la réponse au test 804 est affirmative, le sous-programme CAMROT entre dans une phase de modification du mode de commande de la boîte de vitesses.

Cette phase a essentiellement pour but de garantir que, si le conducteur modifie inopinément ou volontairement la position du levier de commande avant le déroulement de la partie que l'on vient de décrire du sous-programme CAMROT, la boîte se replace dans le rapport approprié compte tenu des conditions de roulement du véhicule au moment du changement de la position du levier de commande.

Cette phase terminale du sous-programme CAMROT commence par un test en 842 pour vérifier si le levier reste dans la position neutre N. Si la réponse est affirmative, le programme reboucle sur l'opération 839 et l'exécution du sous-programme CAMROT s'achève par les opérations 840 et 841. Si, par contre, la réponse est négative, un test est effectué en 843 pour vérifier si la vitesse du véhicule est égale a zéro (véhicule à l'arrêt). Si le véhicule est arrêté, un test est effectué 844 pour contrôler le régime du moteur. Le test reboucle sur le test 842, tant que ce régime ne correspond pas au régime compatible avec un passage dans le rapport 1 (environ 1000 t/m). Pendant le temps d'attente, on peut faire exécuter en 845 le sous-programme CAMCOR pour ajuster éventuellement les positions angulaires des arbres 10 et 11 sur leurs positions de consigne du moment.

Si le test en 843 constate que le véhicule se déplace, il convient de passer le rapport correspondant à cette vitesse. Par conséquent, en 846, le volet d'air 86 est ouvert et l'alternateur est coupé pour faire monter le régime du moteur. En 847, une nouvelle vérification est faite pour constater s'il n'a pas été placé sur la position neutre N. Si la réponse est positive, le sous-programme reboucle sur l'opération 839. Sinon, un test est effectué en 848 pour vérifier si le régime du moteur correspond à celui qui est compatible avec le rapport à engager. Ce test se reboucle tant que le régime n'est pas descendu à la valeur imposée.

Puis, en 849, le volet d'air 86 est fermé. En 850, un délai d'attente est fourni après quoi, en 851, les paramètres de positionnement des arbres 10 et 11 sont acquis dans la mémoire de travail du microprocesseur. Le nouveau rapport est affiché grâce au sous-programme SETTLE en 852, puis le système procède au positionnement des arbres 11 et 10 (dans l'ordre) en 853 et 854, respectivement. Après le rétablissement en 855 de l'alimentation en carburant, l'écoulement d'un délai établi en 856 et le serrage de l'embrayage effectué en 857, le sous-programme CAMROT reboucle sur le programme principal en 858. Enfin, à l'issue du test 844, le système effectue également les opérations 850 à 858 pour placer la boîte dans le rapport 1, pour que le véhicule soit prêt à repartir.

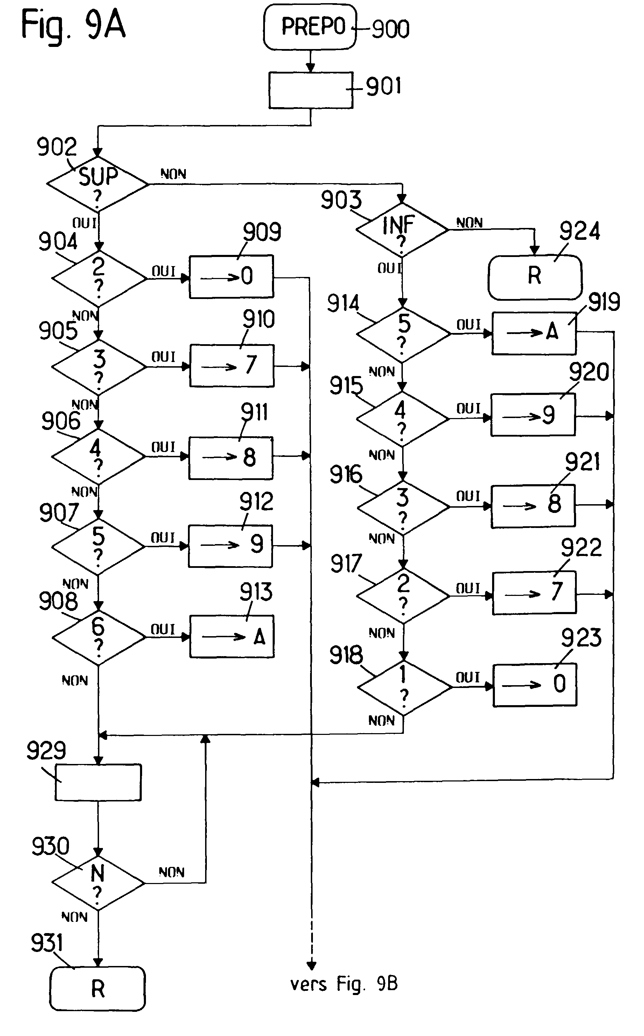

On va maintenant décrire le sous-programme PREPO en se référant aux figures 9A et 9B. Ce sous-programme est exécuté dans plusieurs phases de la procédure de commande de la boîte pour placer l'arbre 10 dans une position de neutre qui soit le plus favorable pour l'amener dans la position du rapport sélectionné. Si la boîte doit aller vers un rapport supérieur, la position neutre la plus favorable est celle qui se trouve immédiatement en amont, vu dans sens de la numérotation des positions de l'arbre 10. Bien entendu, pour un rapport descendant, la position la plus favorable se trouve en aval.

Lors de la description donnée ci-dessus à propos du sous-programme CARUN, on a déjà précisé comment les diverses positions de l'arbre 10 sont désignées. Ces désignations sont utilisées de la même façon pour décrire le sous-programme PREPO. Ce dernier est initié en 900 (figure 9A). En 901, la valeur angulaire de consigne, c'est à dire la position angulaire du rapport de vitesses sur lequel la boîte doit commuter, est acquise dans la mémoire de travail du microprocesseur. Un test est effectué en 902 pour déterminer si le rapport suivant est ascendant. Sinon, le programme passe à un test en 903 pour vérifier si le rapport suivant est descendant.

Si le test en 902 est affirmatif, le sous-programme PREPO passe par une série de tests (904 à 908) pour comparer la valeur de consigne acquise en 901 avec les valeurs angulaires des diverses positions de rapport de vitesses de l'arbre 10. Le premier des tests donnant une réponse affirmative fait passer le sous-programme à l'opération de commande du moteur 51 pour que l'arbre 10 soit tournée vers la position de neutre qui, dans la sens de la montée des rapports, est immédiatement située avant la position requise pour l'engagement du rapport souhaité. Ces opérations sont désignées respectivement par les références 909 à 913.

Si, par ailleurs la réponse au test 903 est affirmative, les mêmes tests et les mêmes opérations de commande sont effectuées, mais bien entendu dans le sens descendant. Les tests correspondants sont désignés par les références 914 à 918 et les opérations de commande correspondantes par 919 à 923.

Si la réponse au test 903 est négative, le programme reboucle en 924 sur le sous-programme dont il constitue lui-même un sous-programme. A l'issue de chacune des opérations 909 à 913 et 919 à 923, le programme passe dans le sous-programme CAMCOR en 925 (figure 10B) pour placer l'arbre 10 dans la position de neutre sélectionnée par le programme PREPO. Bien entendu, pendant ce temps, l'arbre 11 se trouve dans la position à 112° dans laquelle il soulève les contre-cames des rainures de l'arbre 10.

L'exécution du sous-programme CAMCOR est suivie d'une opération 926 de stabilisation de la position sélectionnée de l'arbre 10, puis en 927 de la confirmation de la valeur de position acquise en 901 après quoi le sous-programme PREPO reboucle en 928 sur le sous-programme à partir duquel il a été initié.

Si l'un ou l'autre des tests 908 et 918 s'avère négatif, un message d'erreur est affiché en 929, puis le système attend la réponse à un test en 930 vérifiant si une position neutre est atteinte. Sinon, le sous-programme reboucle sur le message d'erreur. Dans l'affirmative, le sous-programme PREPO reboucle en 931 sur le sous-programme à partir duquel il a été initié.

On va maintenant examiner le sous-programme NEUTRE sur lequel boucle le programme principal, lorsque le test en 412 (figure 4) s'avère négatif et le test en 414 s'avère positif. Le sous-programme NEUTRE apparaît sur les figures 10A, 10B et 10C; il est initialisé en 1000 lorsque le levier de commande est placé dans la position N (figure 2A). Tout d'abord, une procédure anti-rebond sur le contact correspondant est effectuée en 1001, puis l'affichage 66 est commandé en 1002 pour afficher le chiffre "0".

En 1003, des paramètres de positionnement (à tolérance serrée) du l'arbre 10 sont introduits dans la mémoire de travail du microprocesseur, puis en 1004 plusieurs commandes sont effectuées telles que la coupure de l'alternateur, la fermeture du volet 86 et l'ouverture de l'alimentation en combustible. En 1005, la valeur de 112° de l'arbre 11 est introduite dans la mémoire du microprocesseur.

En 1006, un test est effectué pour vérifier si le levier de commande vient-d'être déplacé de la position M ou A à la position N. Dans l'affirmative, un rapport peut être engagé de sorte que le sous-programme NEUTRE doit commander d'abord en 1007 le desserrage de l'embrayage 7. Le programme passe ensuite en 1008 au sous-programme CARUN déjà décrit ci-dessus, ce qui place notamment l'arbre 11 dans la position de 112° de libération des contre-cames 42, 43 et 44.

Un délai est fixé en 1009 puis l'embrayage est de nouveau serré en 1010. Ensuite, en 1011, la vitesse du véhicule est introduite dans la mémoire de travail du microprocesseur. Si le test en 1006 donne une réponse négative, le programme saute les pas 1007 à 1010.

Ensuite, le sous-programme NEUTRE s'engage dans des opérations de recherche du neutre correspondant à la vitesse instantanée du véhicule. Pour ce faire, la valeur acquise en 1011 est comparée à l'une des tables de vitesses dont une description à été faite ci-dessus à propos du sous-programme AUTOM pour ce qui concerne les opérations 707 et 708 (figure 7A). La table utilisée ici est celle qui correspond à la table de "ralentissement" associée à la position relevée de la pédale d'accélérateur. Au cours de l'exécution du sous-programme NEUTRE, il n'est pas nécessaire d'employer l'autre table, ce qui simplifie les opérations à exécuter.

Par conséquent, en 1012 un test est exécuté pour vérifier si la vitesse VV du véhicule est supérieure à la vitesse Vlh1 qui est la vitesse haute de la plage de valeurs autorisée pour le premier rapport de la table de "ralentissement". Si la réponse à ce test est négative, le programme passe en 1013 à un test qui vérifie si la vitesse VV est inférieure à la valeur basse de cette plage. Si la réponse à ce test est affirmative, une opération 1014 mémorise deux valeurs qui vont être disponibles pour les opérations ultérieures, à savoir la valeur angulaire 0 de l'arbre 10 et la valeur angulaire 1 de celui-ci, pour le cas où immédiatement après le mode manuel est sélectionné par le conducteur.

Si la réponse au test 1012 est affirmative, le programme passe au second cycle du programme relatif au neutre 1 et au rapport 2. A l'issue de l'opération 1014 et au cas où le test 1015 s'avère positif, le programme passe à l'opération 1016 qui est l'exécution du programme CAMCOR de positionnement de l'arbre 10 sur la valeur angulaire sélectionnée.

Les cycles suivants du programme se déroulent de façon analogue et les opérations équivalentes du programme ont été désignées par les mêmes références numériques suivies d'un indice littéral. Bien entendu, le cycle relatif au rapport 6 fait exception car, lorsque l'opération 1012D reçoit une réponse positive, la valeur de neutre 0 et la valeur M=1 sont placées en 1017 dans la mémoire du microprocesseur avant que le programme ne passe à l'exécution du sous-programme CAMCOR. Dans tous les cas, à l'issue de l'exécution de ce programme, le sous-programme NEUTRE reboucle sur le programme principal en 1018.

On va se référer maintenant à la figure 11 qui illustre le déroulement du sous-programme DGEAR. Ce sous-programme est initié en 1100, lorsque la réponse au test 418 du programme principal s'avère positive. En d'autres termes, pour entrer dans ce sous-programme, le levier de commande doit être déplacé de la position M à la position INF de la figure 2A.

Une opération d'anti-rebond est effectuée en 1101 après quoi un test est effectué en 1102 pour vérifier si la vitesse du véhicule est inférieure à une très faible vitesse (3 km/h, par exemple). Si cette vitesse est inférieure à cette valeur, le programme passe en 1103 à l'affichage clignotant du signe -- pour montrer au conducteur qu'aucun rapport ne va être engagé. Si on lâche le levier le programme est sauté entièrement jusqu'à une opération de suppression du clignotement de l'affichage en 1104, après quoi, le programme reboucle sur le programme principal en 1105.

Si la vitesse du véhicule est supérieure à la vitesse faible, le test en 1102 reçoit une réponse négative et le programme passe à un test en 1106 pour vérifier si la valeur de commande de rapport est égale à 1. Si c'est le cas, le programme reboucle également sur l'opération 1104, puisqu'évidemment un rapport inférieur au premier ne peut être engagé. Si le test s'avère négatif, le programme continue sur une opération en 1107 faisant passer l'affichage au nombre inférieur que celui qui était précédemment affiché. En 1108, l'affichage est amené à clignoter montrant qu'un passage de rapport est en cours. En 1109, un test est effectué pour vérifier la position du levier de commande. Si celui-ci est placé dans la position N, le programme passe en 1110 à une opération d'affichage du rapport engagé à ce moment. Sinon, on va vérifier par le test en 1111 si la vitesse du véhicule est inférieure à la plage de vitesses fixées par les tables de vitesses décrites précédemment (se rapportant au ralentissement) pour le rapport demandé par le conducteur. Si ce n'est pas le cas, un nouveau test est effectué en 1112 pour vérifier si la vitesse V n'est pas supérieure à cette plage. Si la réponse à ce test est négatif, le sous-programme DGEAR entre en 1113 dans le sous-programme CAMROT déjà décrit précédemment, pour que les arbres 10 et 11 puissent être placés dans leurs positions angulaires adéquates. Si les réponses aux tests 1111 et 1112 sont positives, le programme reboucle sur le test 1109.

A l'issue du déroulement du programme CAMROT, un test est effectué en 1114 pour vérifier une nouvelle fois la position du levier de commande. Si le levier a été placé sur la position neutre, l'affichage est corrigé par l'opération 1110. A l'issue de cette opération ou en cas d'une réponse négative au test 1114, le programme reboucle sur le sous-programme CAMCOR en 1115 pour positionner les deux arbres 10 et 11 avec précision. Puis, en 1116, le programme vérifie si le levier de commande est bien revenu à la position M pour passer ensuite à l'opération 1104 et sortir sur le programme principal en 1105.

Le sous-programme UGEAR sur lequel passe le système après une réponse positive au test 420, est similaire mutatis mutandis au sous-programme DGEAR. En effet, le test 1106 équivalent vérifie non pas la valeur 1, mais la valeur 6 du rapport engagé, tandis que l'opération équivalent de l'opération 1107 consiste à faire en sorte que l'affichage affiche le nombre supérieur au lieu du nombre inférieur. Par ailleurs, au cours des tests qui équivalent les tests 1109 et 1111 on examine les valeurs de la plage de vitesses de la table correspondant au rapport supérieur.

## Revendications

1. Dispositif de propulsion pour véhicule automobile comportant :
- un moteur d'entraînement à combustion interne (3) dont le régime peut être commandé par l'intermédiaire d'une pédale des gaz (PG); et
- une transmission (1, 6), ladite transmission comprenant :
- une boîte de vitesses (1),
- un convertisseur de couple (6), et
- un embrayage (7) couplé entre ledit moteur (3) et ladite boîte de vitesses (1) comprenant
- un arbre primaire (8), un arbre secondaire (9), des jeux de pignons calés respectivement sur ces arbres (8, 9) pour être sélectivement mis en prise afin d'assurer l'établissement des rapports de vitesses (1 à 6), les mouvements d'engagement et de dégagement des pignons étant assurés par l'intermédiaire d'un dispositif de commutation mécanique (10, 11, 30, 31, 32) comportant un arbre (10) de sélection de rapports dont des positions angulaires prédéterminées constituent alternativement des positions neutres de dégagement desdits pignons et des positions d'engrènement sélectif desdits pignons pour établir les rapports de vitesses de ladite boîte (1), le dispositif de commutation mécanique comportant également un arbre de commande (11) coopérant avec ledit arbre de sélection (10) pour autoriser la sélection à partir de tout rapport précédent vers n'importe quel rapport de vitesses suivant,
- et un dispositif de commande électronique (DCE) de ladite boîte de vitesses (1),
- ledit dispositif de propulsion étant caractérisé en ce qu'il comprend également des moyens permettant le passage des rapports de vitesse (1 à 6) sans l'aide de synchroniseurs comprenant :
- des moyens (86, 87) pour augmenter rapidement le régime dudit moteur à combustion interne indépendamment de la commande exercée par l'intermédiaire de ladite pédale des gaz (PG) et en ce que ledit dispositif de commande électronique (DGE) comporte, en vue de la descente de rapport de ladite boîte (1) :
- des moyens pour placer ledit arbre de sélection (10) dans l'une desdites positions neutres, ladite position neutre étant située immédiatement en aval de la position du nouveau rapport,
- des moyens pour actionner temporairement lesdits moyens (86, 87) d'augmentation rapide du régime,
- des moyens pour surveiller ledit régime et
- des moyens pour n'autoriser le passage dudit arbre de sélection (10) vers la position du rapport inférieur que lorsque le régime atteint une valeur compatible avec ledit rapport inférieur.

2. Dispositif de propulsion suivant la revendication 1, caractérisé en ce que ledit dispositif de commande électronique (DCE) comporte également
- des moyens pour définir une première table de valeurs, chaque valeur de cette première table représentant un régime dudit moteur (3) autorisé pour un rapport déterminé de ladite boîte de vitesses (1), et
- des moyens pour, lors de chaque passage de rapport, comparer le régime du moteur à la valeur de ladite première table correspondant au régime autorisé pour le rapport à passer et à n'autoriser le passage que lorsque de la comparaison résulte une égalité.

3. Dispositif de propulsion suivant l'une quelconque des revendications précédentes, caractérisé en ce que ledit dispositif de commande électronique (DCE) comporte également
- des moyens pour définir le rapport de vitesses dans lequel ladite boîte (1) doit être engagé en fonction de la vitesse de déplacement dudit véhicule.

4. Dispositif de propulsion suivant la revendication 3, caractérisé en ce que ledit dispositif de commande électronique (DCE) comporte également:
- des moyens pour définir au moins une seconde table de valeurs contenant pour chaque rapport de vitesses de ladite boîte une plage de valeurs de vitesse de déplacement dudit véhicule,
- des moyens pour comparer la vitesse de déplacement instantanée dudit véhicule avec les valeurs de ladite seconde table,
- des moyens pour engendrer des valeurs de position angulaire dudit arbre de sélection (10) en fonction du résultat de ladite comparaison, ces valeurs de position représentant respectivement les rapports à engager, et
- des moyens pour, en fonction desdites valeurs de position, amener ledit arbre de sélection (10) dans la position correspondant chaque fois au rapport à engager.

5. Dispositif de propulsion suivant l'une quelconque des revendications 1 et 2, caractérisé en ce qu'il comporte également :
- des moyens (75) pour définir sur la course de ladite pédale des gaz (PG), au moins une partie haute et une partie basse et
- des moyens pour engendrer un signal de position lors de la transition de ladite pédale (PG) d'une desdites parties de sa course à l'autre et inversement, et
- en ce que ledit dispositif de commande électronique (DCE) comporte également :
- des moyens pour définir également une troisième table de valeurs contenant pour chaque rapport de vitesses de ladite boîte, une plage de valeurs de vitesses de déplacement dudit véhicule, différente de la plage de valeurs de vitesse de déplacement de ladite seconde table, et
- des moyens pour, en fonction dudit signal de position de ladite pédale (PG), effectuer ladite comparaison sur les valeurs de vitesse de l'une ou de l'autre desdites seconde et troisième tables de valeurs.

6. Dispositif de propulsion suivant la revendication 5, caractérisé en ce que lesdites seconde et troisième tables contiennent, pour des mêmes rapports de vitesses, des plages de valeurs différentes.

7. Dispositif de propulsion suivant l'une quelconque des revendications précédentes, caractérisé en ce que ledit dispositif de commande électronique (DCE) comporte un microprocesseur (53).

## Patentansprüche

1. Kraftfahrzeug-Antriebsvorrichtung, mit
- einem Brennkraft-Antriebsmotor (3), dessen Drehzahl über ein Gaspedal (PG) gesteuert werden kann; und
- einer Kraftübertragung (1, 6), die umfaßt:
- ein Getriebe (1),
- einen Drehmomentwandler (6) und
- eine Kupplung (7), die zwischen den Motor (3) und das Getriebe (1) geschaltet ist, umfassend
- eine Primärwelle (8), eine Sekundärwelle (9), zwei Ritzelsätze, die an der einen bzw. an der anderen dieser Wellen (8, 9) befestigt sind, um wahlweise eingerückt zu werden, um die Herstellung von Übersetzungsverhältnissen (1 bis 6) sicherzustellen, wobei die Einrück- und Ausrückbewegungen der Ritzel über eine mechanische Schaltvorrichtung (10, 11, 30, 31, 32) gewährleistet werden, die eine Welle (10) zum Wählen der Verhältnisse aufweist, deren vorgegebene Winkelpositionen abwechselnd neutrale Ausrückstellungen der Ritzel und wahlweise Einrückstellungen der Ritzel bilden, um die Übersetzungsverhältnisse des Getriebes (1) herzustellen, wobei die mechanische Schaltvorrichtung außerdem eine Steuerwelle (11) aufweist, die mit der Wählwelle (10) zusammenwirkt, um die Wahl ausgehend von jeglichem vorhergehenden Verhältnis zu einem beliebigen folgenden Übersetzungsverhältnis zuzulassen,
- und eine elektronische Steuervorrichtung (DCE) für das Getriebe (1),
- wobei die Antriebsvorrichtung dadurch gekennzeichnet ist, daß sie außerdem Mittel umfaßt, die den Übergang zwischen den Übersetzungsverhältnissen (1 bis 6) ohne Unterstützung durch Synchronisierer ermöglichen und umfassen:
- Mittel (86, 87) zum schnellen Erhöhen der Drehzahl des Brennkraftmotors unabhängig von der über das Gaspedal (PG) ausgeübten Steuerung, und daß die elektronische Steuervorrichtung (DGE) für eine Absenkung des Verhältnisses des Getriebes (1) enthält:
- Mittel, die die Wählwelle (10) in eine der Neutralstellungen bringen, wobei sich die Neutralstellung unmittelbar hinter der Stellung für das neue Verhältnis befindet,
- Mittel zum vorübergehenden Betätigen der Mittel (86, 87) zum schnellen Erhöhen der Drehzahl,
- Mittel zum Überwachen der Drehzahl und
- Mittel, die den Übergang der Wählwelle (10) in die Stellung mit niedrigerem Verhältnis nur zulassen, wenn die Drehzahl einen mit dem niedrigeren Verhältnis verträglichen Wert erreicht.

2. Antriebsvorrichtung nach Anspruch 1, dadurch gekennzeichnet, daß die elektronische Steuervorrichtung (DCE) außerdem enthält:
- Mittel zum Definieren einer ersten Wertetabelle, wobei jeder Wert dieser ersten Tabelle eine Drehzahl des Motors (3) darstellt, die für ein bestimmtes Verhältnis des Getriebes (1) zugelassen ist, und
- Mittel, die bei jedem Verhältniswechsel die Drehzahl des Motors mit dem Wert der ersten Tabelle vergleichen, der der Drehzahl entspricht, die für das einzunehmende Verhältnis zugelassen ist, und den Wechsel nur zulassen, wenn der Vergleich eine Gleichheit ergibt.

3. Antriebsvorrichtung nach einem der vorhergehenden Ansprüche, dadurch gekennzeichnet, daß die elektronische Steuervorrichtung (DCE) außerdem enthält:
- Mittel, die das Übersetzungsverhältnis, in das das Getriebe (1) eingerückt werden soll, in Abhängigkeit von der Fahrgeschwindigkeit des Fahrzeugs definieren.

4. Antriebsvorrichtung nach Anspruch 3, dadurch gekennzeichnet, daß die elektronische Steuervorrichtung (DCE) außerdem enthält:
- Mittel, die wenigstens eine zweite Wertetabelle definieren, die für jedes Übersetzungsverhältnis des Getriebes einen Bereich von Fahrgeschwindigkeitswerten des Fahrzeugs enthält,
- Mittel zum Vergleichen der Ist-Fahrgeschwindigkeit des Fahrzeugs mit den Werten der zweiten Tabelle,
- Mittel zum Erzeugen von Winkelpositionswerten der Wählwelle (10) in Abhängigkeit vom Vergleichsergebnis, wobei diese Positionswerte jeweils die herzustellenden Verhältnisse darstellen, und
- Mittel, die die Wählwelle (10) in Abhängigkeit von den Positionswerten in diejenige Position führen, die dem jeweils herzustellenden Verhältnis entspricht.

5. Antriebsvorrichtung nach einem der Ansprüche 1 und 2, dadurch gekennzeichnet, daß sie außerdem enthält:
- Mittel (75), die im Hub des Gaspedals (PG) wenigstens einen oberen Teil und einen unteren Abschnitt definieren, und
- Mittel zum Erzeugen eines Stellungssignals beim Übergang des Pedals (PG) von einem der Teile seines Hubs zum anderen und umgekehrt, und
- daß die elektronische Steuervorrichtung (DCE) außerdem enthält:
- Mittel, die außerdem eine dritte Wertetabelle definieren, die für jedes Übersetzungsverhältnis des Getriebes einen Bereich von Fahrgeschwindigkeitswerten des Fahrzeugs enthält, der vom Bereich von Fahrgeschwindigkeitswerten der zweiten Tabelle verschieden ist, und
- Mittel, die in Abhängigkeit vom Stellungssignal des Pedals (PG) den Vergleich mit den Geschwindigkeitswerten der einen oder der anderen der zweiten und dritten Wertetabellen ausführen.

6. Antriebsstrang nach Anspruch 5, dadurch gekennzeichnet, daß die zweite und die dritte Tabelle für dieselben Übersetzungsverhältnisse unterschiedliche Wertebereiche enthalten.

7. Antriebsstrang nach einem der vorhergehenden Ansprüche, dadurch gekennzeichnet, daß die elektronische Steuervorrichtung (DCE) einen Mikroprozessor (53) enthält.

## Claims

1. Motor vehicle drive device comprising:
- an internal combustion drive engine (3) whose revs can be controlled via an accelerator pedal (PG); and
- a transmission (1, 6), said transmission comprising :
- a gearbox (1),
- a torque converter (6),
- a clutch (7) coupled between said engine (3) and said gearbox (1) comprising :
- a primary shaft (8), a secondary shaft (9), sets of pinions wedged respectively on said shafts (8, 9) so as to be able to be selectively meshed in order to assure the establishment of the gear ratios (1 to 6), the engaging and disengaging movements of said pinions being assured via a mechanical switching device (10, 11, 31, 31, 32) comprising a gear ratio selector shaft (10) whose predetermined angular positions constitute alternatively neutral disengaged positions of said pinions and selective engaged positions of said pinions for establishing the gear ratios of said gearbox (1), the mechanical switching device also comprising a control shaft (11) cooperating with said selector shaft (10) to enable the selection to be made from any previous gear ratio to any subsequent gear ratio,
- and an electronic control device (DCE) for said gearbox (1),
- said drive device being characterized in that it also comprises means permitting the shift of the gear ratios (1 to 6) without the aid of synchronizers comprising :
- means (86, 87) for rapidly increasing the revs of said internal combustion engine independently of the control exercised via said accelerator pedal (PG) and in that, with a view to the down-shifting of said gearbox (1), said electronic control device (DGE) comprises :
- means for placing said selector shaft (10) in one of said neutral positions, said neutral position being situated immediately below the position of the new gear ratio,
- means for temporarily actuating said means for rapidly increasing the revs (86, 87),
- means for monitoring said revs, and
- means for preventing said selector shaft (10) from shifting to the lower gear ratio position except when the revs reach a value compatible with said lower gear ratio.

2. Drive device according to claim 1, characterized in that said electronic control device (DCE) also comprises :
- means for defining a first table of values, each value of said first table representing a permitted level of revs of said engine (3) for a determined ratio of said gearbox (1), and
- means for comparing the engine revs, at each gear ratio shift, to the value of said first table which corresponds to the permitted level of revs for the gear ratio to be shifted into, and only permitting the shift to take place when the result of the comparison shows that the values are equal.

3. Drive device according to any one of the preceding claims, characterized in that said electronic control device (DCE) also comprises :
- means for defining the gear ratio in which said gearbox (1) must be engaged as a function of the travelling speed of said vehicle.

4. Drive device according to claim 3, characterized in that said electronic control device (DCE) also comprises :
- means for defining at least a second table of values containing a range of travelling speed values of said vehicle for each gear ratio of said gearbox,
- means for comparing the instant travelling speed of said vehicle with the values of said second table,
- means for generating angular position values of said selector shaft (10) as a function of the result of said comparison, these position values respectively representing the gear ratios to be engaged, and
- means for bringing said selector shaft (10) each time into the position corresponding to the gear ratio to be engaged, as a function of said position values.

5. Drive device according to any one of claims 1 and 2, characterized in that it also comprises :
- means (75) for defining in the travel of said accelerator pedal (PG) at least a high part and a low part and
- means for generating a position signal when said accelerator pedal (PG) moves from one of said parts of its travel to another and vice versa, and
- in that said electronic control device (DCE) also comprises :
- means for also defining a third table of values containing, for each gear ratio, a range of travelling speed values of said vehicle, different from the range of travelling speed values of said second table, and
- means for carrying out said comparison of the speed values of either said second or said third tables of values, as a function of said position signal of said pedal (PG).

6. Drive device according to claim 5, characterized in that said second and third tables contain, for the same gear ratios, different ranges of values.

7. Drive device according to any one of the preceding claims, characterized in that said electronic control device (DCE) comprises a microprocessor (53).
